(19) Europäisches Patentamt

European Patent Office

Office européen des brevets

(11) **EP 0 750 749 B1**

(12) **EUROPÄISCHE PATENTSCHRIFT**

(45) Veröffentlichungstag und Bekanntmachung des Hinweises auf die Patenterteilung:
**30.08.2000 Patentblatt 2000/35**

(51) Int. Cl.$^7$: **G01P 21/00**

(21) Anmeldenummer: **95909643.9**

(86) Internationale Anmeldenummer:
**PCT/DE95/00219**

(22) Anmeldetag: **22.02.1995**

(87) Internationale Veröffentlichungsnummer:
**WO 95/25284 (21.09.1995 Gazette 1995/40)**

(54) **ELEKTRONISCHE EINRICHTUNG ZUM TESTEN EINES BESCHLEUNIGUNGSEMPFINDLICHEN SENSORS**

ELECTRONIC ARRANGEMENT FOR TESTING AN ACCELERATION-SENSITIVE SENSOR

DISPOSITIF ELECTRONIQUE POUR TESTER UN DETECTEUR D'ACCELERATION

(84) Benannte Vertragsstaaten:
**DE FR GB SE**

(30) Priorität: **12.03.1994 DE 4408383**
**08.11.1994 DE 4439886**

(43) Veröffentlichungstag der Anmeldung:
**02.01.1997 Patentblatt 1997/01**

(73) Patentinhaber: **ROBERT BOSCH GMBH**
**70442 Stuttgart (DE)**

(72) Erfinder:
• **MATTES, Bernhard**
**D-74343 Sachsenheim (DE)**
• **GADEMANN, Lothar**
**D-72108 Rottenburg (DE)**
• **NITSCHKE, Werner**
**D-71254 Ditzingen (DE)**
• **BERGFRIED, Dietrich**
**D-71032 Böblingen (DE)**
• **HOPF, Gerald**
**D-72768 Reutlingen (DE)**
• **ZIEGENBEIN, Botho**
**D-72766 Reutlingen (DE)**
• **MEDER, Klaus**
**D-71254 Ditzingen (DE)**
• **HENNE, Ralf**
**D-74343 Sachsenheim (DE)**
• **WALKER, Thomas**
**D-72127 Kusterdingen (DE)**
• **MAIHOEFER, Bernd**
**D-72768 Reutlingen (DE)**
• **KURSAWE, Frank**
**D-70499 Stuttgart (DE)**
• **SCHAEDLER, Peter**
**D-71636 Ludwigsburg (DE)**

(56) Entgegenhaltungen:
EP-A- 0 525 549          WO-A-89/03999
DE-A- 3 542 397          DE-A- 3 809 299
US-A- 2 873 426

**Beschreibung**

Die Erfindung betrifft eine elektronische Einrichtung mit einem beschleunigungsempfindlichen Sensor nach dem Oberbegriff des Anspruchs 1.

Stand der Technik

Aus DE 37 06 765 A1 ist ein Aufprallsensor für ein Fahrzeug mit einer Prüfschaltung bekannt. Um die Funktionstüchtigkeit des Aufprallsensors überprüfen zu können, ist ein elektroakustischer Wandler vorgesehen, der den in dem Aufprallsensor vorhandenen Beschleunigungsfühler beschallt. Die dadurch von dem Beschleunigungsfühler abgegebenen elektrischen Signale werden in einer Auswerte- und Auslöseschaltung hinsichtlich vorgegebener Kriterien mit Hilfe einer Prüfschaltung überprüft.

Aus DE 37 36 294 A1 ist weiter eine Einrichtung zur Funktionskontrolle von Beschleunigungssensoren bekannt, bei der ein oder mehrere Beschleunigungaufnehmer durch elektrische Anregung so stimuliert werden, daß einer der Aufnehmer als Körperschallsender wirkt, während der andere oder die anderen dessen Signale empfängt und damit über eine Auswerteschaltung in seiner Funktion, Eichung und Ankopplung an die Gehäusestruktur überprüft wird.

Aus DE 35 42 397 A1 ist eine Anordnung zur Funktionsprüfung von piezoelektrischen Beschleunigungsaufnehmern bekannt, die mehrere mit Elektroden versehene piezoelektrische Elemente aufweist, von denen mindestens eines als Meßsensor bei Beaufschlagung durch eine von der aufzunehmenden Beschleunigung verursachte Kraft eine elektrische Reaktionsspannung erzeugt und bei der wenigstens eines der piezoelektrischen Elemente zeitweise als Aktuator für das andere Piezoelement wirkt, indem den Elektroden des Aktuatorelementes eine elektrische Prüfspannung zugeführt wird.

Aus US 3 830 091 A1 ist weiterhin eine Testeinrichtung für Beschleunigungsgeber bekannt, die einen Aluminiumstab umfaßt, der vermittels piezoelektrischer Kristalle zu Schwingungen anregbar ist. Auf der Stirnfläche des Aluminiumstabes sind ein Standardbeschleunigungsgeber und der zu testende Beschleunigungsgeber angeordnet. Eine Auswerteschaltung vergleicht die Ausgangssignale der beiden an der Stirnfläche des Aluminiumstabes angeordneten Beschleunigungsgeber, die durch den schwingenden Aluminiumstab angeregt werden.

Weiterhin ist aus US 3 120 622 A1 ein selbst kalibrierender Beschleunigungsmesser bekannt, der ein beschleunigungsempfindliches Element und in enger Verbindung mit diesem ein piezoelektrisches Element umfaßt. Bei elektrischer Anregung des piezoelektrisches Elementes erzeugt dieses mechanische Schwingungen und regt damit das beschleunigungsempfindliche Element an.

Schließlich ist aus DE 38 09 299 C2 eine elektronische Einrichtung mit einem schwingfähigen Sensor und mit einer Auswerteschaltung zur Auswertung eines bei Beschleunigungsbeanspruchung auftretenden Ausgangssignales des Sensors und mit einem in Nachbarschaft des Sensors angeordneten Schwingungserzeuger, durch den der Sensor zu mechanischen Schwingungen anregbar ist, bekannt, bei der der Sensor für Prüfzwecke durch den Schwingungserzeuger zu Schwingungen anregbar ist, die auch die Resonanzfrequenz des Sensors einschließen.

Vorteile der Erfindung

Die Erfindung ermöglicht auf besonders einfache Weise eine Überprüfung der elektronischen Einrichtung auf Funktionsfähigkeit, die insbesondere auch eine Überprüfung des Sensors einschließt. Für die Überprüfung sind im Gegensatz zu den aus dem Stand der Technik bekannten Lösungen keine zusätzlichen Spannungsquellen oder externe Schwingungserzeuger notwendig. Besonders vorteilhaft ist, daß der Sensor frequenzbestimmender Bestandteil eines Schwingkreises ist und durch entsprechende Ausgestaltung dieses Schwingkreises, zumindest während der Dauer einer Testphase, vorteilhafterweise jedoch ständig während der Betriebszeiten des Fahrzeugs, zu Schwingungen anregbar ist. Sobald nämlich der Sensor schwingt, kann davon ausgegangen werden, daß er funktionsfähig ist und auch auf das Fahrzeug einwirkende Beschleunigungen registriert. Im Falle von Beschädigungen des Sensors, wie beispielsweise einem Bruch des Keramiksubstrates, Ablösung von Elektroden oder dergleichen wird es nämlich nicht gelingen, den Sensor zu Schwingungen anzuregen. Besonders vorteilhaft ist, daß durch vergleichsweise einfache Schaltmittel der Sensor abwechselnd in Serien- bzw. Parallelresonanz anregbar ist, wodurch sich eine erweiterte Diagnosemöglichkeit bezüglich der Funktion des Sensors eröffnet. Vorzugsweise werden die Schaltmittel durch einen Mikrorechner angesteuert, so daß sich vielfältige Schaltvarianten besonders einfach programmieren lassen. Bei besonders vorteilhaften Ausgestaltungen der Erfindung wird der Schwingkreis so bemessen, daß der Sensor zu Schwingungen auf seiner Eigenfrequenz anregbar ist. Diese Eigenfrequenz liegt jedoch wesentlich höher als der Frequenzbereich, in dem das auszuwertende Nutzsignal zu erwarten ist. Da zur besseren Auswertung des Nutzsignals eine Tiefpaßfilterung zweckmäßig ist, kann die Oszillatorfrequenz des schwingenden Sensors nicht ohne weiteres auf die Auswerteschaltung übertragen werden. In den vorteilhaften Ausgestaltungen der Erfindung werden daher zweckmäßig Frequenzteilerschaltungen vorgesehen, die die Oszillatorfrequenz auf einen niedrigen Wert herabsetzen, der auch die Tiefpaßschaltungen noch passieren kann. In einem besonders vorteilhaften Ausführungsbeispiel der Erfindung wird als Frequenzteilerschaltung eine bistabile Kippstufe eingesetzt, die von einem Mikrorechner gesteuert wird. In einem weiteren vorteilhaften Ausführungsbeispiel der Erfindung wird von der Oszillatorfrequenz des schwingenden Sensors ein Taktsignal zur Steuerung der gesamten Auswerteschaltung abgeleitet. Das Nichtvorhandensein dieses Taktsignals bei einem Defekt des Sensors kann dann auf einfache Weise für eine Fehlererkennung benutzt werden.

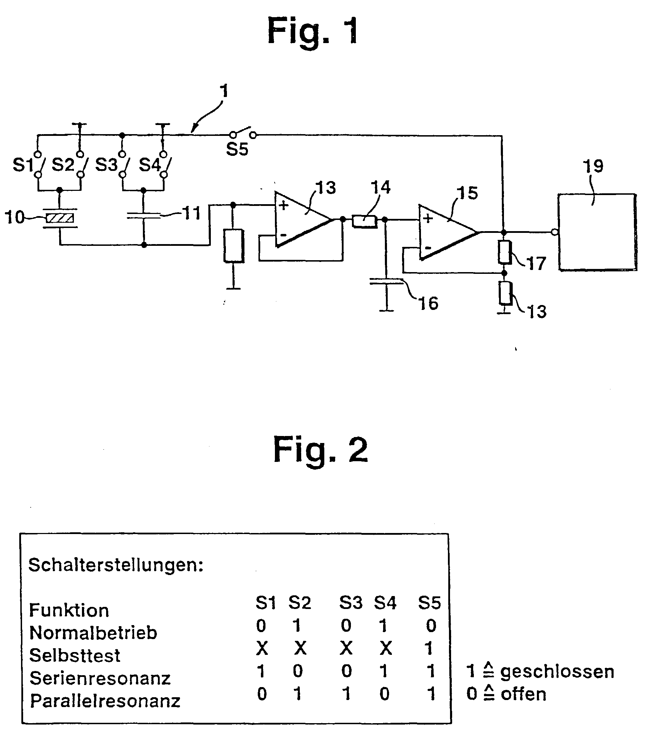

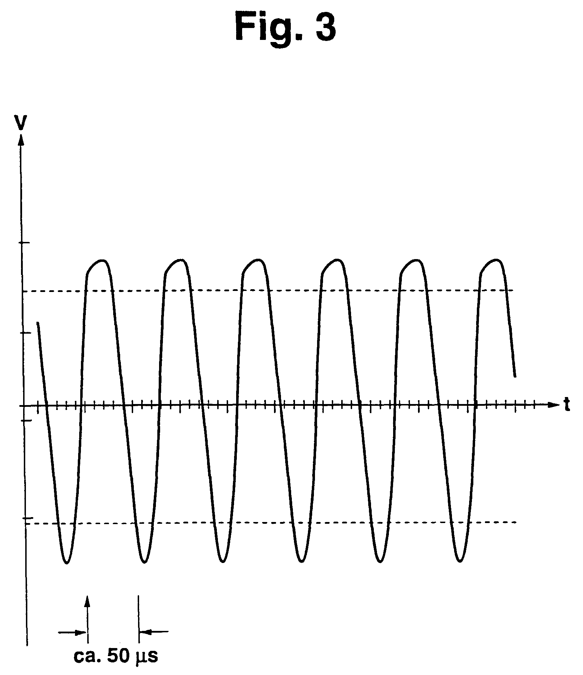

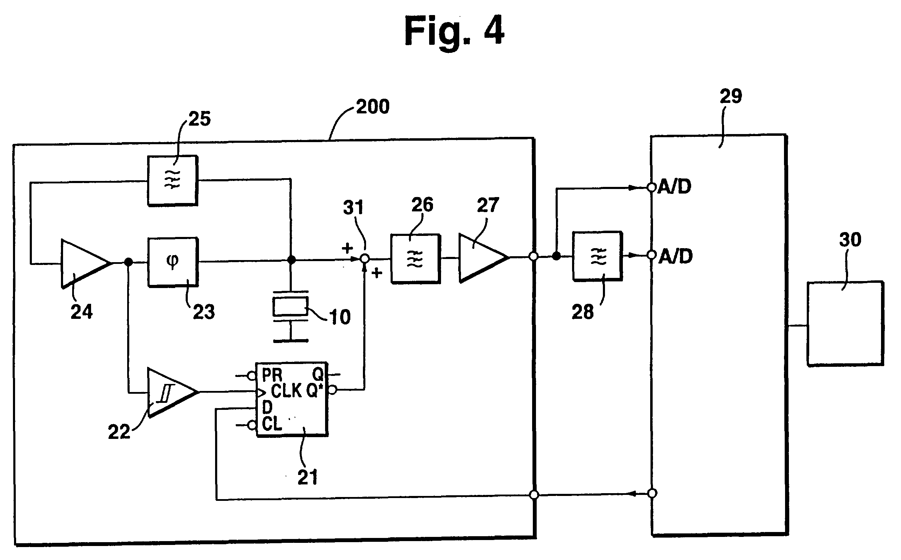

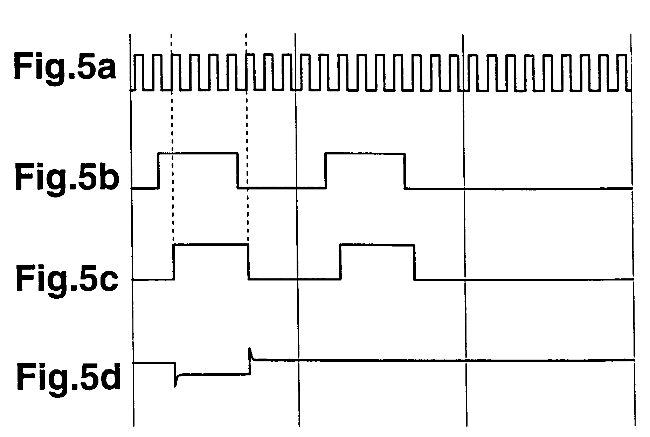

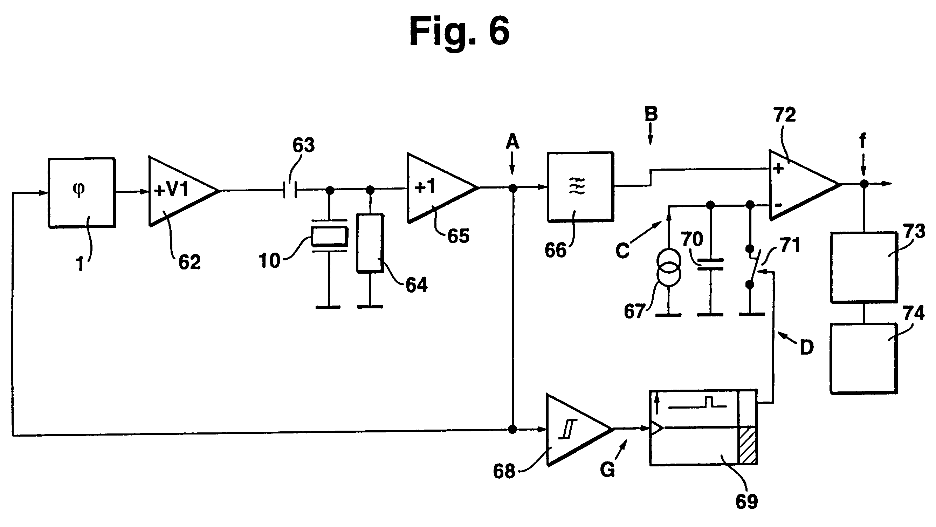

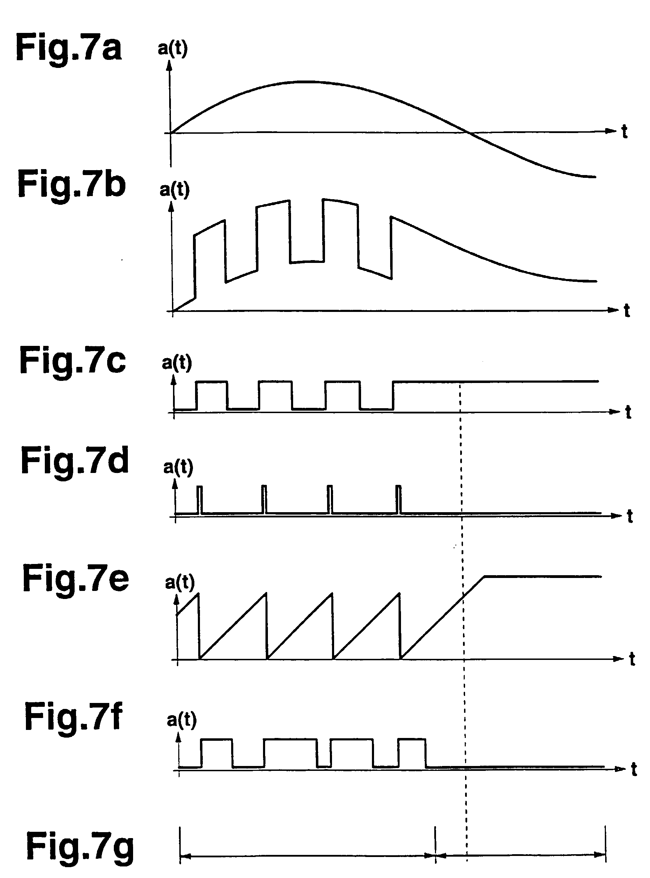

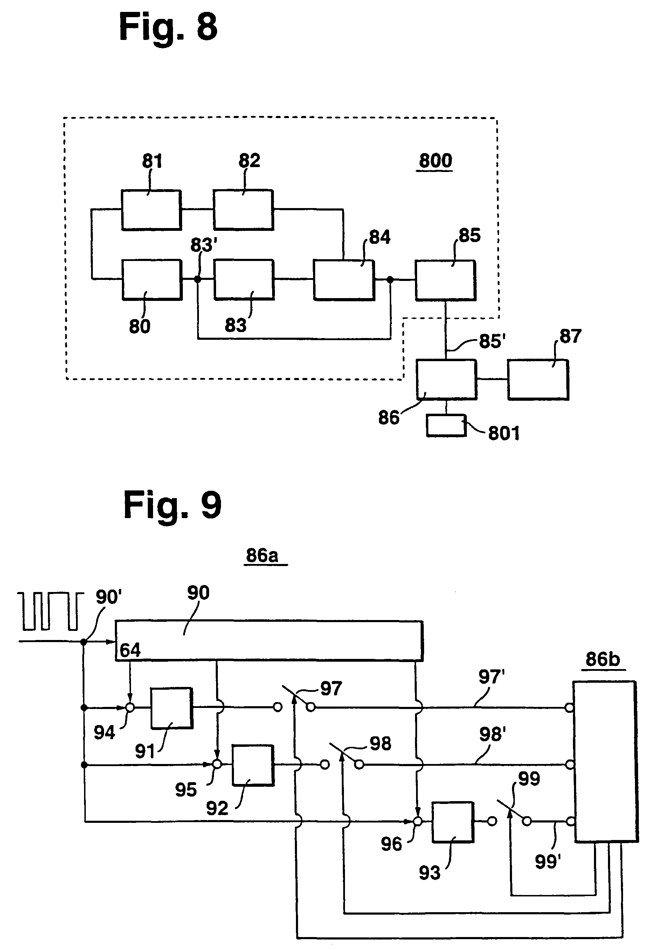

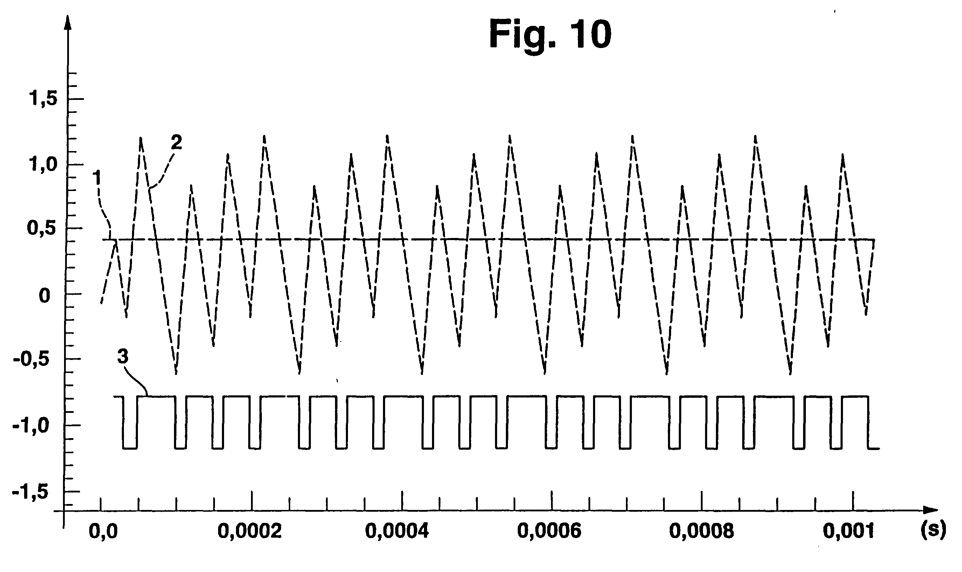

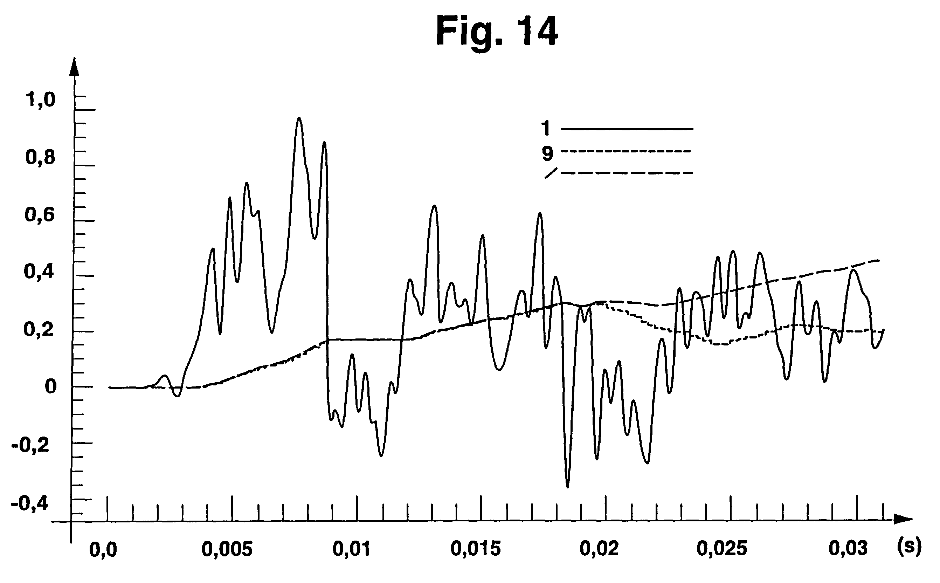

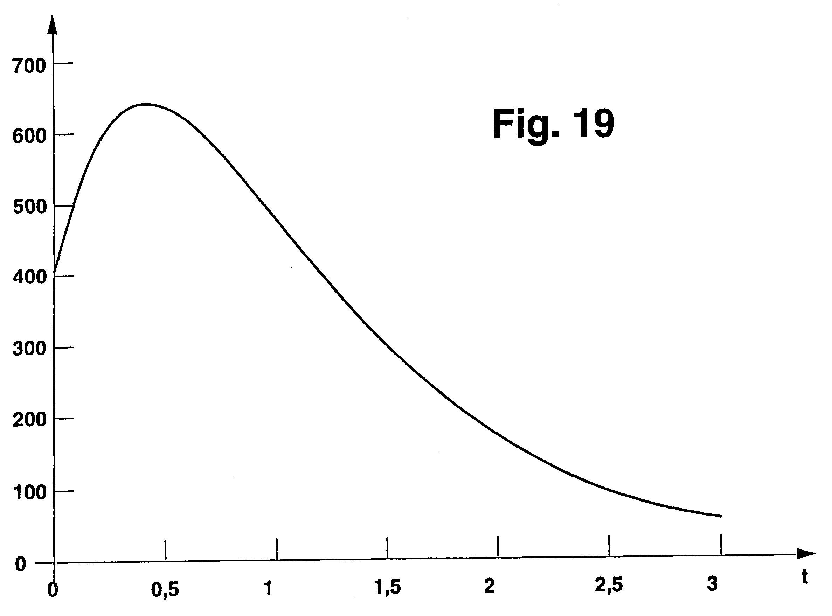

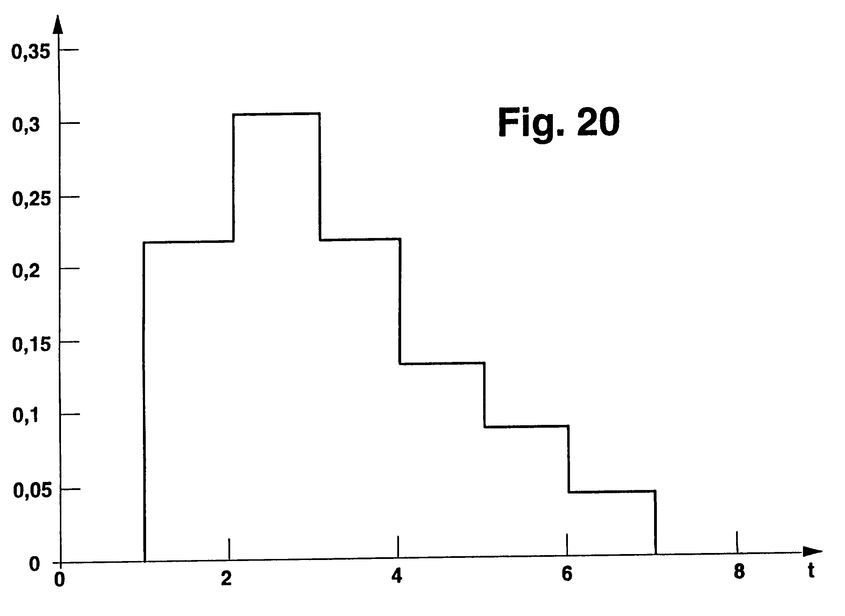

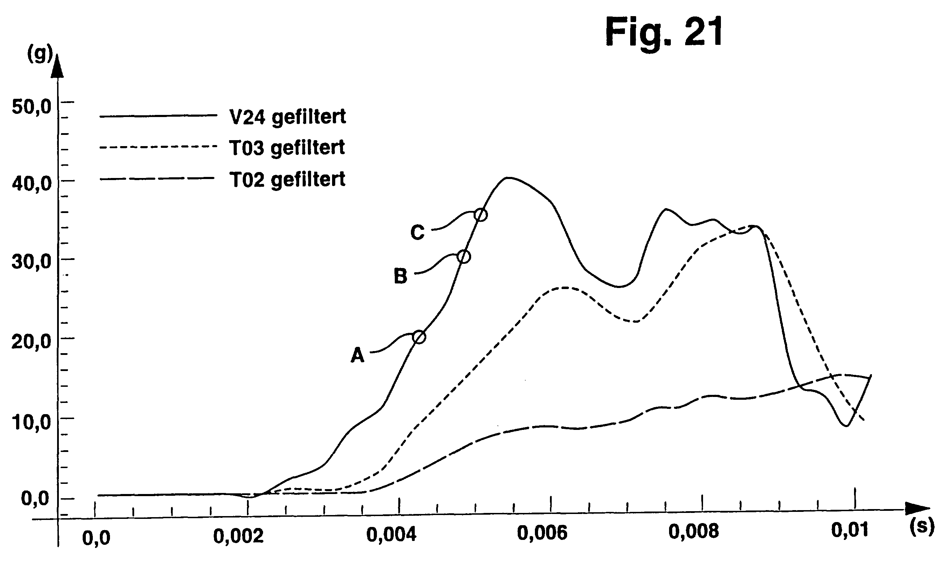

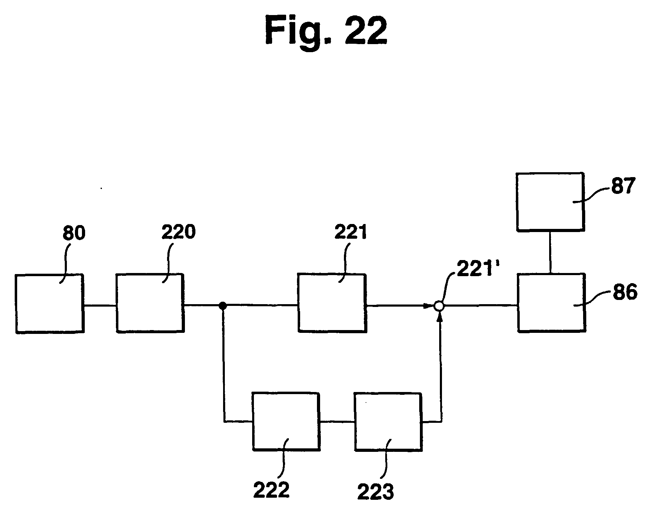

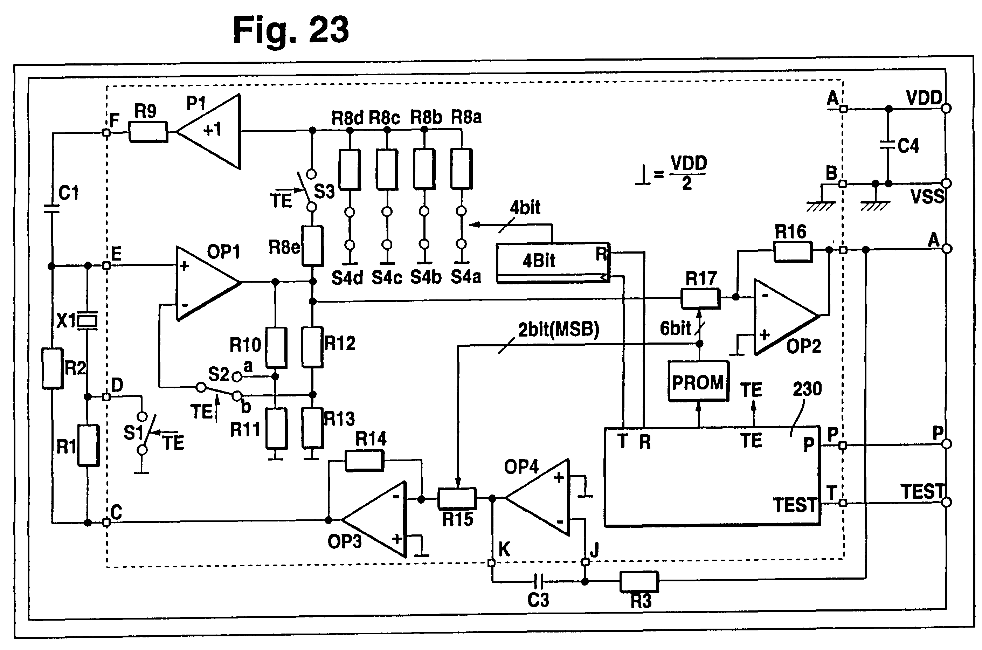

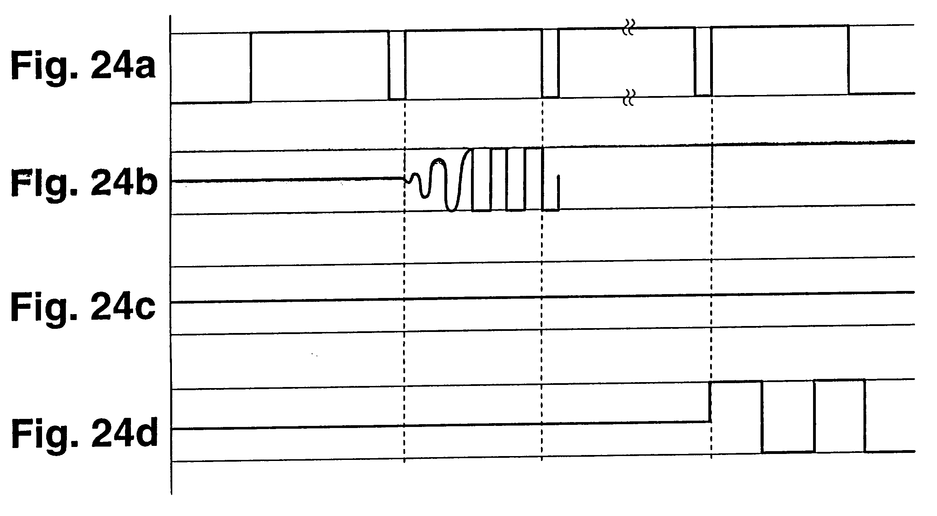

Ausführungsbeispiele der Erfindung werden nachfolgend unter Bezug auf die Zeichnung und die Beschreibung näher erläutert. Dabei zeigen Figur 1 ein Blockschaltbild eines ersten Ausführungsbeispiels der elektronischen Einrichtung, Figur 2 eine dazugehörige Funktionstabelle mit Erläuterung der Schalterstellungen der Schaltmittel, Figur 3 ein Funktionsdiagramm, in dem Spannungswerte als Funktion der Zeit aufgetragen sind, Figur 4 ein Blockschaltbild eines zweiten Ausführungsbeispiels der elektronischen Einrichtung, Figur 5 ein dazugehöriges Funktionsdiagramm, Figur 6 ein drittes Ausführungsbeispiel der Erfindung, Figur 7 ein dazugehöriges Funktionsdiagramm, Figur 8 ein viertes Ausführungsbeispiel der Erfindung, Figur 9 ein Schieberegister mit Summiergliedern als Teilbaugruppe des in Figur 8 dargestellten Steuergerätes, Figur 10 bis Figur 16 diverse Funktionsdiagramme, Figur 19 und Figur 20 Filterkurven, Figur 21, in einem Funktionsdiagramm, gefilterte Beschleunigungssignale als Funktion der Zeit, Figur 22 ein fünftes Ausführungsbeispiel der Erfindung, Figur 23 ein sechstes Ausführungsbeispiel der Erfindung und Figur 24 (Figur 24a bis Figur 24d) zu diesem sechsten Ausführungsbeispiel gehörende Funktionsdiagramme.

Beschreibung der Ausführungsbeispiele

Figur 1 zeigt ein erstes Ausführungsbeispiel einer erfindungsgemäßen elektronischen Einrichtung 1 mit einem beschleunigungsempfindlichen Sensor 10. Ein Anschluß dieses Sensors 10 ist mit dem Anschluß eines ersten Kondensators 11 und weiterhin mit dem nicht invertierenden Eingang eines ersten Operationsverstärkers 13 verbunden. Der invertierende Eingangsanschluß dieses ersten Operationsverstärkers 13 ist mit dem Ausgangsanschluß dieses Verstärkers verbunden. An den Ausgang dieses Verstärkers 13 ist ein Widerstand 14 angeschlossen, der wiederum mit dem nicht invertierenden Eingang eines weiteren Operationsverstärkers 15 verbunden ist. Zwischen Masse und dem nicht invertierenden Eingangsanschluß des Verstärkers 15 ist ein weiterer Kondensator 16 geschaltet. Der invertierende Eingangsanschluß des Verstärkers 15 ist mit dem Verbindungspunkt von zwei Widerständen 17, 18 verbunden. Der andere Anschluß des Widerstands 18 ist mit Masse verbunden, während der andere Anschluß des Widerstands 17 mit dem Ausgangsanschluß des Verstärkers 15 verbunden ist. Weiterhin ist der Ausgang des Verstärkers 15 mit dem Eingangsanschluß einer Auswertungsschaltung 19 verbunden. Schließlich ist der Ausgangsanschluß des Verstärkers 15 noch mit dem ersten Pol eines Ein/Aus-Schalters S5 verbunden. Der andere Pol des Schalters S5 ist mit je einem Pol weiterer Ein/Aus-Schalter S1, S3 verbunden. Ein jeweils anderer Pol der Schalter S1, S3 ist einerseits mit je einem Pol jeweils eines dritten und vierten Ein/Aus-Schalters S2, S4 und andererseits mit dem freien Anschluß des Sensors 10 bzw. des Kondensators 11 verbunden. Der jeweils andere Pol der Schalter S2, S4 ist mit Masse verbunden.

Die jeweiligen Schalterstellungen und die sich daraus ergebenden Funktionen sind in der Funktionstabelle gemäß Figur 2 aufgelistet. In dieser Tabelle kennzeichnet die Zahl 1 jeweils einen geschlossenen Schalterzustand, während die Zahl 0 einen offenen Schalterzustand bedeutet. Im Normalbetrieb der elektronischen Einrichtung sind die Schalter S1, S3 und S5 geöffnet, während die Schalter S2 und S4 geschlossen sind. Zum Zwecke des Selbsttestes der elektronischen Einrichtung wird Schalter S5 in die geschlossene Stellung überführt. Eine Schwingung des Sensors 10 in Serienresonanz wird erreicht, wenn die Schalter S1 und S4 geschlossen und die Schalter S2 und S3 geöffnet sind. Eine Anregung des Sensors 10 in Parallelresonanz wird durch eine Schalterstellung erreicht, in der die Schalter S2 und S3 geschlossen und die Schalter S1 und S4 geöffnet sind. Das Funktionsdiagramm der Figur 3, in dem Spannungswerte V als Funktion der Zeit t aufgetragen sind, erläutert den Schwingungszustand des Sensors 10 im Rückkopplungsfall. Dargestellt ist eine Schwingung mit einer Frequenz von ungefähr 12 Kilohertz. Das ist diejenige Resonanzfrequenz, mit der der Sensor 10 im Testbetrieb, also bei geschlossenem Schalter S5, schwingt. Der Sensor 10 schwingt dabei auf seiner eigenen, von ihm selbst bestimmten Resonanzfrequenz, ohne daß eine externe Wechselspannung für Anregung der Schwingung vorgegeben werden muß. In einer einfachen Auswertung wird entweder in Serien- oder Parallelresonanz die Resonanzfrequenz ausgewählt und die entsprechende Frequenz bestimmt. Die Bestimmung der Frequenz erfolgt in der Auswertungsschaltung 19, in der auch im Normalbetrieb die von dem Sensor 10 abgegebenen Ausgangssignale ausgewertet werden. Dabei wird zweckmäßig ein Frequenzbereich vorgegeben, in dem die Resonanzfrequenz eines funktionstüchtigen Sensors 10 liegen muß. Bei einer komplexeren Auswertung werden sowohl die Parallel- als auch die Serienresonanzfrequenz bestimmt. Wenn diese Frequenzen bestimmt sind, genügt die Kenntnis der Kapazität des Sensors 10, um zusätzlich auch noch die Empfindlichkeit des Sensors 10 für Beschleunigung, Kraft und dergleichen abzuschätzen.

Ein zweites Ausführungsbeispiel einer erfindungsgemäßen elektronischen Einrichtung wird nachfolgend unter Bezug auf das in Figur 4 dargestellte Blockschaltbild und das in Figur 5 dargestellte Funktionsdiagramm erläutert.

Ein piezoelektrischer Sensor 10 ist Bestandteil eines rückgekoppelten Schwingkreises, der neben dem Sensor 10 einen Phasenschieber 23, einen Verstärker 24 und einen Hochpass 25 und ein Addierglied 31 (Spannungsaddierer) umfaßt. Ein Anschluß des Sensors 10 ist mit dem Masseanschluß der Einrichtung verbunden. Der masseferne Anschluß des Sensors 10 ist mit dem Eingangsanschluß eines Spannungsaddierers 31 und eines Hochpaßfilters 25 verbunden. Der Ausgangsanschluß des Hochpaßfilters 25 ist mit dem Eingangsanschluß des Verstärkers 24 verbunden. Der Ausgangsanschluß des Spannungsaddierers 31 ist mit dem Eingangsanschluß des Tiefpaßfilters 26 verbunden. Der Ausgangsanschluß des Tiefpaßfilters 26 ist mit dem Eingangsanschluß eines Verstärkers 27 verbunden, dessen Ausgangsanschluß mit dem Eingangsanschluß eines weiteren Tiefpaßfilters 28 verbunden ist. Der Ausgangsanschluß des Tiefpaßfilters 28 ist mit einem ersten Eingangsanschluß eines Analog/Digital-Wandlers eines Mikrorechners 29 verbunden. Ebenso ist der Eingangsanschluß des Tiefpaßfilters 28 mit einem zweiten Anschluß eines Analog/Digital-Wandlers des Mikrorechners 29 verbunden. Die Verbindungsleitung zwischen dem Verstärker 24 und dem Phasenschieber 23 ist mit dem Eingang einer Impulsformerstufe 22 verbunden, deren Ausgangsanschluß mit einem Eingangsanschluß einer bistabilen Kippstufe 21 verbunden ist. Ein weiterer Eingangsanschluß der bistabilen Kippstufe 21 ist mit einem Testanschluß verbunden, der wiederum mit einem Ausgangsanschluß des Mikrorechners 29 verbunden ist.Der Ausgangsanschluß der bistabilen Kippstufe 21 ist mit dem massefernen Anschluß des Sensors 10 verbunden. Die vorerwähnten Bauelemente 20 - 27 sind in einer Sensorbaugruppe 200 zusammengefaßt. Diese Sensorbaugruppe 200 kann im Bedarfsfall auch räumlich getrennt von dem Mikrorechner 29 angeordnet sein. Dies ist insbesondere dann zweckmäßig, wenn beschleunigungsempfindliche Sensoren 10 dezentral, d. h. beispielsweise in der Nähe der Außenhaut des Fahrzeugs, angeordnet werden müssen, um einen Seitenaufprall erkennen zu können. Ein Ausgang des Mikrorechners 29 ist weiterhin mit mindestens einem Rückhaltemittel 30 für Fahrzeuginsassen, wie beispielsweise Airbag und/oder Gurtstraffer verbunden.

Im folgenden wird die Funktionsweise dieses Ausführungsbeispiels beschrieben. Sobald infolge von Krafteinwirkungen auf das Fahrzeug eine Beschleunigung auf den Sensor 10 ausgeübt wird, findet eine Verformung des Sensors 10 statt, die sich durch eine an den Anschlußklemmen des Sensors 10 abgreifbare Spannung äußert. Die Ausgangsspannung des Sensors 10 wird über einen Tiefpaßfilter 26 gefiltert und mit einem vorzugsweise programmierbaren Kalibrierverstärker 27 auf eine vorgebbare Nennempfindlichkeit gebracht. Zweckmäßig wird das verstärkte Ausgangssignal des Sensors 10 durch einen weiteren Tiefpaßfilter 28 geleitet, bevor es einem ersten Eingangsanschluß eines Analog/Digital-Wandlers zugeführt wird, der in einem Mikrorechner 29 angeordnet ist. In diesem Mikrorechner 29 wird das von dem Sensor 10 abgegebene Ausgangssignal daraufhin überprüft, ob eine Unfallsituation vorliegt. Wird anhand der Analyse des Ausgangssignals des Sensors 10 eine für die Fahrzeuginsassen kritische Unfallsituation erkannt, dann steuert der Mikrorechner 29 ein die Fahrzeuginsassen sicherndes Sicherungsmittel 30, wie beispielsweise einen Airbag und /oder einen Gurtstraffer an. Bei elektronischen Einrichtungen dieser Art, die für die Sicherheit der Fahrzeuginsassen vorgesehen sind, ist es außerordentlich wichtig, eine ständige Funktionsbereitschaft sicherzustellen. Zumindest soll im Falle einer Funktionsstörung der Fahrer einen Hinweis, zum Beispiel durch Aufleuchten einer Warnlampe, erhalten, um dann notfalls unverzüglich eine Werkstatt aufsuchen zu können. Eine Überprüfung des Sensors 10, eines besonders kritischen Bauelements, wird dadurch ermöglicht, daß der Sensor 10 Bestandteil eines rückgekoppelten Schwingkreises 10, 23, 24, 25 ist und zumindest für die Dauer eines Funktionstests in diesem Schwingkreis zu Schwingungen angeregt wird. Als besonders zweckmäßig hat es sich erwiesen, den Sensor 10 ständig zu Schwingungen anzuregen, da hierdurch eine kontinuierliche Überwachung des Sensors 10 möglich ist. Vorzugsweise ist der Schwingkreis so dimensioniert, daß der Sensor 10 auf einer Eigenfrequenz schwingt, die bei handelsüblichen Sensoren in der Größenordnung einiger 10 Kilohertz liegt. Beispielsweise schwingt der Sensor 10 auf einer zwischen etwa 30 und 40 Kilohertz liegenden Frequenz. Diese Schwingung des angeregten Sensors 10 ist schematisch in dem Funktionsdiagramm in Figur 5a dargestellt. Eine solche Schwingungsfrequenz ist wesentlich höher als das beschleunigungsabhängige Nutzsignal, das von dem Mikrorechner 29 ausgewertet werden soll. Dieses Nutzsignal liegt im Bereich einiger 100 Hertz und kann somit die Tiefpässe 26 und 28 passieren, deren Grenzfrequenz beispielsweise bei ungefähr 250 Hertz liegt. Diese Tiefpässe lassen jedoch nicht die vergleichsweise hohe Schwingungsfrequenz des zu Eigenschwingungen angeregten Sensors 10 passieren. Um nun dennoch feststellen zu können, ob der Sensor 10 in seinem schwingkreis 10, 23, 24, 25 tatsächlich schwingt und demzufolge voll funktionsfähig ist, ist eine bistabile Kippstufe 21 vorgesehen, deren Ausgangsanschluß mit dem massefernen Anschluß des Sensors 10 verbunden ist. Einem ersten Eingangsanschluß der bistabilen Kippstufe 21 wird, über eine Impulstormerstufe 22, das hochfrequente Testsignal zugeführt, das am Ausgang des Verstärkers 24 abgegriffen wird. Einem zweiten Eingangsanschluß der bistabilen Kippstufe 21 wird ein von dem Mikrorechner 29 erzeugtes Steuersignal zugeführt, das an dem Testanschluß der Sensorbaugruppe 200 anliegt. Dieses Steuersignal, das vorzugsweise die Gestalt eines Rechtecksignals mit einer Amplitude von ca. 5 Volt und eine vom Mikrorechner 29 bestimmte niedrige Frequenz (zum Beispiel einige Kilohertz) aufweist, ist in dem Funktionsdiagramm 5b dargestellt. Dieses Steuersignal liegt am D-Eingang der bistabilen Kippstufe 21 an. Sobald nun die nächste positive Flanke der an dem Ausgang des Verstärkers 24 abgegriffenen Oszillatorschwingung (Fig. 5a) an dem Eingang der bistabilen Kippstufe 21 anliegt, wird der jeweils aktuelle Zustand des D-Eingangs der bistabilen Kippstufe 21 auf ihren Ausgangsanschluß durchgeschaltet. An diesem Ausgang liegt somit das in dem Diagramm der Figur 5c dargestellte Signal an. Dieses Signal überlagert sich an der in dem Blockschaltbild der Figur 4 dargestellten Summationsstelle 31 vor dem Tiefpaß 26 mit dem auf Beschleunigungseinwirkung zurückzuführenden Ausgangs signal des Sensors 10 und kann zusammen mit diesem den Tiefpaß 26 und den Verstärker 27 passieren, so daß an dem Ausgangsanschluß des Verstärkers 27 etwa das in Figur 5d schematisch dargestellte Signal ansteht. Da dem Mikrorechner 29 Frequenz und Amplitude des Steuersignals bekannt sind, das dem D-Eingang der bistabilen Kippstufe 21 zugeführt wird, vermag er auf einfache Weise zu erkennen, ob das an dem Ausgang des Verstärkers 27 abgegriffene Ausgangssignal mit diesem Steuersignal moduliert ist. Ist diese Modulation vorhanden, kann auf eine ordnungsgemäße Funktionsweise des Sensors 10 zurückgeschlossen werden, da er nur in diesem Fall schwingt und der Schwingungszustand des Sensors 10 für eine Durchschaltung des modulierenden Steuersignals zum Ausgangsanschluß der bistabilen Kippstufe 21 sorgt. Im Falle eines Defekts des Sensors, wie z. B. Bruch der Sensorkeramik, Depolarisierung des Sensors, Ablösung von Elektroden und dergleichen, kann der Sensor 10 nicht zu Schwingungen angeregt werden. Demzufolge kommt es auch nicht zu einer Durchschaltung der am Eingangsanschluß D der bistabilen Kippstufe 21 anliegenden Signale zu deren Ausgangsanschluß. Zugleich können selbstverständlich auch noch Fehler im Signalweg, wie beispielsweise Leitungsunterbrechungen und Bauelementdefekte in und außerhalb der Sensorbaugruppe 200 erkannt werden.

Ein drittes Ausführungsbeispiel der erfindungsgemäßen elektronischen Einrichtung wird anhand von Figur 6 und Figur 7 erläutert. Dabei zeigt Figur 6 ein Blockschaltbild der Einrichtung, während Figur 7 ein Funktionsdiagramm mit zahlreichen Signalformen darstellt, die an verschiedenen Punkten des Blockschaltbilds gemäß Figur 6 feststellbar sind.

In Figur 6 ist mit 10 ein piezoelektrischer Sensor bezeichnet, der bei einer Biegebeanspruchung infolge einer Beschleunigungseinwirkung an seinen Anschlußklemmen ein Signal abgibt. Ein Anschluß des Sensors 10 ist mit dem Masseanschluß der elektronischen Einrichtung verbunden. Der masseferne Anschluß des Sensors 10 ist einerseits mit einem Anschluß eines Kondensators 63 und andererseits mit dem Eingangsanschluß eines Pufferverstärkers 65 verbunden. Parallel zu dem Sensor 60 ist ein Widerstand 64 geschaltet. Der zweite Anschluß des Kondensators 63 ist mit dem Ausgangsanschluß eines weiteren Verstärkers 62 verbunden, dessen Eingangsanschluß mit einem Phasenschieber 61 verbunden ist, dessen Eingangsanschluß wiederum mit dem Ausgangsanschluß des Pufferverstärkers 65 verbunden ist. Mit dem Ausgangsanschluß des Pufferverstärkers 65 ist weiterhin der Eingangsanschluß eines Tiefpaßfilters 66 verbunden, dessen Ausgangsanschluß mit dem nicht invertierenden Eingangsanschluß eines Operationsverstärkers 72 verbunden ist. An dem invertierenden Eingangsanschluß des Operationsverstärkers 72 liegen, parallel zueinander geschaltet, eine Referenzstromquelle 67, ein Kondensator 70 und ein Schaltelement 71. Die jeweils zweiten Anschlüsse der zuletzt erwähnten Bauelemente 67, 70, 71 sind mit dem Masseanschluß der elektronischen Einrichtung verbunden. Der Ausgangsanschluß des Pufferverstärkers 65 ist weiterhin mit dem Eingangsanschluß einer Signalformerstufe 68 verbunden, deren Ausgangsanschluß mit dem Triggereingang einer monostabilen Kippstufe 69 verbunden ist. Der Ausgangsanschluß der monostabilen Kippstufe 69 ist mit dem Steueranschluß des Schaltelements 71 verbunden. Der Ausgangsanschluß des Operationsverstärkers 72 ist mit einem Eingangsanschluß eines Mikrorechners 73 verbunden, dessen Ausgangsanschluß mit dem Eingangsanschluß von Rückhaltemitteln 74 für Fahrzeuginsassen, wie beispielsweise Airbag und/oder Gurtstraffer verbunden ist.

Wie bereits erwähnt, liegt bei Beschleunigungseinwirkung an den Anschlußklemmen des Sensors 10 eine Signalspannung an, die an dem parallel zu dem Sensor 10 geschalteten Widerstand 64 abgegriffen wird und dem Pufferverstärker 65 zwecks Weiterverarbeitung zugeleitet wird. Gleichzeitig ist der Sensor 10 frequenzbestimmender Bestandteil eines rückgekoppelten Schwingkreises, der die Bauelemente 10, 61, 62, 63, 65 umfaßt. Bei Erfüllung der Schwingungsbedingung, was durch entsprechende Bemessung der Bauelemente ohne weiteres erreichbar ist, schwingt der Schwingkreis auf einer Eigenfrequenz des Sensors 10. Je nach mechanischer Ausgestaltung des Sensors 10 liegt die Resonanzfrequenz dabei in der Größenordnung einiger 10 Kilohertz, beispielsweise zwischen etwa 10 Kilohertz und 60 Kilohertz. An dem Schaltungspunkt A liegt das aus dem Diagramm der Figur 7b ersichtliche Signal an, das aus den überlagerten Signalanteilen des Oszillatorsignals einerseits und des Beschleunigungssignals (Fig. 7a) andererseits besteht. Für die Weiterverarbeitung und die Auswertung des Beschleunigungssignals muß das an Punkt A der Schaltung anstehende Signal wieder von dem Taktsignal des Oszillatorkreises befreit werden. Dies ist auf einfache Weise durch einen entsprechend dimensionierten Tiefpaßfilter 66 möglich, dessen Signalbandbreite wenige 100 Hertz, insbesondere 200 bis 300 Hertz beträgt. Am Schaltungspunkt B des Blockdiagramms gemäß Figur 6 steht dann das vom Taktsignal des Oszillatorkreises befreite Beschleunigungssignal gemäß Signaldiagramm der Figur 7a zur Verfügung, das dann dem nicht invertierenden Eingangsanschluß des Operationsverstärkers 72 zugeleitet wird. Andererseits wird das am Schaltungspunkt A anstehende Signal (vergleiche Figur 7b) auch dem Eingangsanschluß der Signalformerstufe 68 zugeleitet, die die Signale gemäß Figur 7b in saubere Digitalsignale gemäß Figur 7c umwandelt. Die Signale gemäß Figur 7c stehen am Schaltungspunkt G an. Mit diesen Signalen wird die monostabile Kippstufe 69 getriggert. Dies hat zur Folge, daß am Ausgangsanschluß der monostabilen Kippstufe 69 (Schaltungspunkt D) Signale entsprechend dem Diagramm der Figur 7d anstehen, mit denen der Steuereingang des Schaltelements 71 beaufschlagt wird. Dieses Schaltelement 71 wird demzufolge im Takt dieser in Figur 7d dargestellten Signale geöffnet und geschlossen, wodurch der Kondensator 70 periodisch aufgeladen und wieder entladen wird. Am invertierenden Eingangsanschluß des Operationsverstärkers 72 steht dann das im wesentlichen sägezahnförmig ausgestaltete Signal gemäß Diagramm 7e an. Solange das am Schaltungspunkt B, also auch an dem nicht invertierenden Eingangsanschluß des Operationsverstärkers 72 anliegende Beschleunigungssignal (siehe Figur 7a) bezüglich seiner Amplitude größer ist als die Amplitude der sägezahnförmigen Signalspannung gemäß Figur 7e, bleibt der Ausgangsanschluß des Operationsverstärkers 72 auf einem hohen Signalpegel, der einer logischen 1 entspricht. Ist das Beschleunigungssignal am Schaltungspunkt B niedriger als die sägezahnförmige Spannung gemäß Darstellung des Diagramms 7e, dann fällt der Pegel am Ausgangsanschluß des Operationsverstärkers 72 auf den Wert logisch 0. Am Ausgangsanschluß des Operationsverstärkers 72 (Schaltungspunkt F) liegt demzufolge ein pulsbreitenmoduliertes Signal an (Diagramm 7f), das mit der Frequenz des Oszillatorschaltkreises moduliert ist. Die Information über die Größe der Beschleunigung liegt in der Zeitdauer des höheren Pegels (logisch 1) am Ausgangsanschluß des Operationsverstärkers 72. Je kleiner der Beschleunigungswert ist, mit dem der Sensor 10 beaufschlagt wird, desto kürzer ist die Impulsdauer. Die jeweilige Impulsdauer kann auf einfache Weise in dem Mikrorechner 73 ausgewertet werden. Wenn die festgestellte Beschleunigungshöhe auf ein schwerwiegendes Unfallereignis schließen läßt, steuert der Ausgang des Mikrorechners 73 Rückhaltemittel 74 für Fahrzeuginsassen, wie beispielsweise Airbag und/oder Gurtstraffer an, um die Fahrzeuginsassen zu schützen. In dem an dem Schaltungspunkt A abgreifbaren Ausgangssignal (vergleiche Diagramm der Figur 7b) sind zwei voneinander unabhängige Informationen enthalten. Einerseits eine Information über die Beschleunigung, mit der der Sensor beaufschlagt wird und andererseits eine Information über die Taktfrequenz, mit der der Sensor 10 in dem Schwingkreis schwingt. Eventuelle Fehlerzustände, insbesondere auch Fehler des Sensors 10 können nun auf einfache Weise dadurch erkannt werden,, daß das Taktsignal ausbleibt. Da der Mikrorechner 73 bei der Auswertung des am Schaltungspunkt F anstehenden Signals auf den Takt angewiesen ist (er mißt ja die Zeit zwischen positiver und negativer Flanke des Signals gemäß Diagramm 7f), wird er das Ausbleiben des Taktes erkennen und in einen Fehlerzustand verzweigen. Wenn der Sensor 10 zum Beispiel mit einer Schwingungsfrequenz von 20 Kilohertz schwingt, kann ein Fehlerzustand durch Ausbleiben dieses Schwingungstaktes schon nach rund 50 Mikrosekunden erkannt werden. Insbesondere führen folgende Fehlerzustände zu einem Ausbleiben des Taktsignals und damit zu einer Fehlererkennung:

- alle Fehler in dem Oszillatorkreis 10, 61, 62, 63;

- Fehler in dem Pufferverstärker 65;

- Fehler in der Signalformerstufe 68;

- Fehler in der Referenzstromquelle 67;

- Fehler, insbesondere Kurzschluß bei dem Kondensator 70;

- fehlerhaftes Schaltelement 71;

- fehlerhafter Operationsverstärker 72.

Das mit diesem Ausführungsbeispiel vorgestellte Prinzip funktioniert mit allen Datenübertragungsmethoden, deren Funktion zwingend von einem Taktsignal abhängt und die den Systemtakt, oder zumindest Teile davon, noch im Ausgangssignal enthalten. Beispielsweise könnte anstelle der hier beschriebenen Pulsweitenmodulation auch ein Sigma-Delta-Wandler eingesetzt werden. Auch eine digitale Datenübertragung käme in Frage. Dazu müßte der Pulsweitenmodulator durch einen Analog/Digital-Wandler ersetzt werden, dessen Ausgangssignal seriell an den Mikrorechner 73 weitergeleitet würde. Für eine derartige Übertragung wäre dann zusätzlich noch ein synchrones Schaltwerk nötig, das mit dem Schwingungstakt des Sensors 10 getaktet werden müßte.

Besonders vorteilhaft eignet sich die erfindungsgemäße elektronische Einrichtung für einen Einsatz bei Insassensicherungssystemen, die neben einem zentral angeordneten Steuergerät mit mindestens einem in diesem zentral angeordneten Steuergerät untergebrachten beschleunigungsempfindlichen Sensor auch noch über externe oder ausgelagerte beschleunigungsempfindliche Sensoren verfügen, die beispielsweise nahe der Außenhaut des Fahrzeugs angeordnet sind. Derartige Sicherungssysteme stoßen in jüngster Zeit verstärkt auf Interesse, weil die Fahrzeughersteller bemüht sind, durch sogenannte Seitenairbags die nachteiligen Folgen von Seitenaufprallen zu vermeiden. Derartige Unfallsituationen kommen insbesondere im Stadtverkehr relativ häufig vor. Sie bieten auch besondere Schwierigkeiten bei der rechtzeitigen Erkennung und Einleitung von Sicherungsmaßnahmen, weil, im Vergleich zum Frontalaufprall, nur eine vergleichsweise kleine Knautschzone zur Verfügung steht. Wenn beispielsweise ein Aufprall auf eine Tür des Fahrzeugs erfolgt, muß ein risikoträchtiges Unfallereignis in einer außerordentlich kurzen Zeit, beispielsweise vor Ablauf von drei Millisekunden, erkannt werden. In dieser Zeit hat sich beispielsweise die Türaußenhaut nur um wenige Zentimeter nach innen bewegt. Von dem beispielsweise in der betroffenen Tür angeordneten beschleunigungsempfindlichen Sensor muß dann ein entsprechendes Signal zu dem zentral angeordneten Steuergerät übertragen werden, das die von dem Unfall herrührenden Signale auswertet und erforderlichenfalls Auslösesignale zur Aktivierung der Rückhaltemittel, wie zum Beispiel Airbag, abgibt. Aus Gründen der Störsicherheit wird dabei eine digitale Signalübertragung bevorzugt. Ein derartiges System wird anhand des Ausführungsbeispiels der Figur 8 näher erläutert. In Figur 8 ist mit 86 ein zentral in dem Fahrzeug angeordnetes Steuergerät bezeichnet, das unter anderem Auswerteschaltungen für die Ausgangssignale von beschleunigungsempfindlichen Sensoren, beispielsweise auch eines zentral angeordneten beschleunigungsempfindlichen Sensors 801 umfaßt. Mit 87 ist ein von dem Steuergerät 86 aktivierbarer Airbag bezeichnet. Die elektronische Einrichtung gemäß Figur 8 umfaßt weiter eine Sensorbaugruppe 800, die örtlich getrennt von dem zentral angeordneten Steuergerät 86 in dem Fahrzeug untergebracht ist. Beispielsweise ist die Sensorbaugruppe 800, die einen weiteren beschleunigungsempfindlichen Sensor 80 umfaßt, in der Nähe der Außenhaut des Fahrzeugs, zum Beispiel bevorzugt in einer Fahrzeugtür, untergebracht. Es versteht sich von selbst, daß in dem Fahrzeug mehrere derartige Sensorbaugruppen 800 angeordnet sein können, die mit dem zentral angeordneten Steuergerät 86 verbunden sind. Neben dem bereits schon erwähnten Sensor 80 umfaßt die Sensorbaugruppe 800 weiterhin einen Oszillatorschaltkreis 81, eine Taktvervielfacherschaltung, insbesondere Taktverdopplungsschaltung 82, eine Integratorschaltung 83, eine Analog/Digital-Wandlerschaltung 84, sowie eine Treiberschaltung 85. Dabei ist der Ausgangsanschluß der Analog/Digital-Wandlerschaltung 84 einerseits an dem Verknüpfungspunkt 83' mit dem Eingangsanschluß der Integratorschaltung 83 und andererseits mit dem Eingangsanschluß der Treiberschaltung 85 verbunden. Der Ausgangsanschluß der Treiberschaltung 85 ist mit dem Eingangsanschluß des entfernt angeordneten Steuergerätes 86 verbunden. Der Ausgangsanschluß der Taktverdopplungsschaltung 82 ist mit einem Takteingang der Analog/Digital-Wandlerschaltung 84 verbunden.

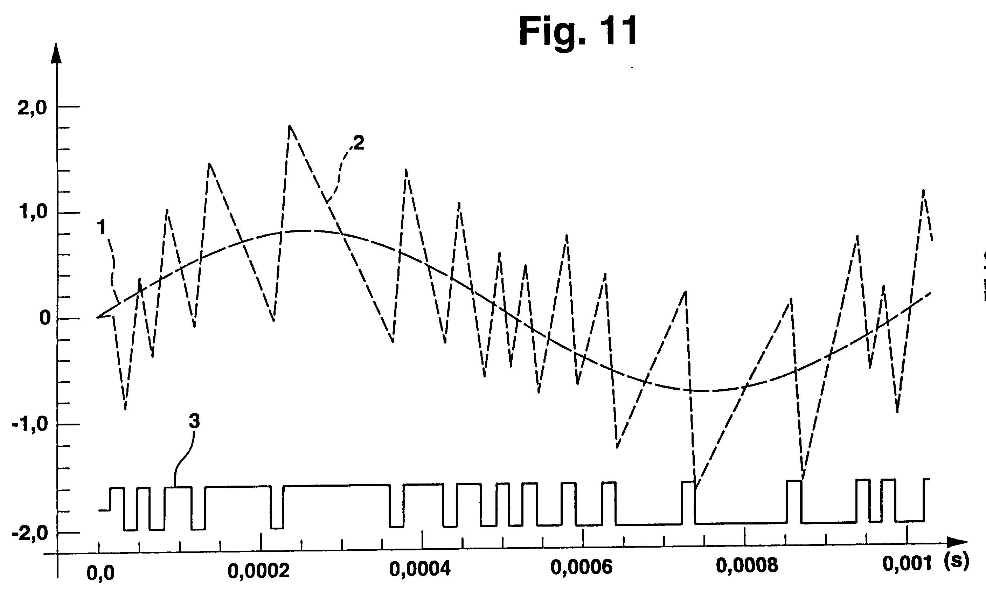

Wie schon im Zusammenhang mit den oben erläuterten Ausführungsbeispielen beschrieben, bilden der beschleunigungsempfindliche Sensor 80 und der Oszillatorschaltkreis 81 einen zu Schwingungen anregbaren Schwingkreis, der den Sensor 80 zu Schwingungen auf seiner Resonanzfrequenz anregt. Diese Resonanzfrequenz kann, je nach Ausführungsform des Sensors 80, im Bereich einiger 10 Kilohertz liegen und betrage beispielsweise 32 KHz. Diese Schwingungsfrequenz wird der nachgeschalteten Taktvervielfachungsschaltung, insbesondere Taktverdopplungsschaltung 82 zugeführt, die die Schwingungsfrequenz auf eine Frequenz TS = 64 KHz verdoppelt. Diese Frequenz wird als Taktfrequenz dem Takteingang der Analog/Digital-Wandlerschaltung 84 zugeführt, die das an dem Ausgangsanschluß der Integratorschaltung 83 anstehende Ausgangssignal mit der zuvor erwähnten Taktfrequenz TS in ein digitales Signal umwandelt, das über eine Treiberschaltung 85 zu dem entfernt angeordneten Steuergerät 86 weitergeleitet wird. Dem Eingangsanschluß der Integratorschaltung 83 wird am Verknüpfungspunkt 83' das Ausgangssignal des beschleunigungsempfindlichen Sensors 80 zugeleitet, das durch die Baugruppen 83 und 84 einer Sigma-Delta-Modulation unterzogen wird. Dieses Modulationsverfahren wird unter Bezug auf die Funktionsdiagramme der Figur 10 und Figur 11 anhand von zwei Beispielen erläutert. In dem ersten Beispiel gemäß Figur 10 werde angenommen, daß an dem Eingangsanschluß der Integratorschaltung 83, also an dem Verknüpfungspunkt 83' ein konstantes Ausgangssignal des Sensors 80 mit der relativen, zeitlich konstanten Amplitude von 0,4 anliege. Dieser Signalverlauf ist in dem Diagramm der Figur 10 durch die parallel zur Zeitachse verlaufende Kurve 1 veranschaulicht. Das an dem Ausgangsanschluß der Integratorschaltung 83 liegende Ausgangssignal ist durch die mit gestricheltem Kurvenzug dargestellte Kurve 2 veranschaulicht. Schließlich ist das an dem Ausgangsanschluß der Analog/Digital-Wandlerschaltung 84 anliegende digitale Ausgangssignal, das durch Abtastung des Integratorausgangssignals mit der Taktfrequenz TS von 64 KHz gewonnen worden ist, im unteren Teil des Diagramms der Figur 10 als ausgezogener Kurvenzug (Kurve 3) dargestellt. Es handelt sich dabei um ein impulsbreitenmoduliertes Rechtecksignal. Das Diagramm gemäß Figur 11 erläutert die zuvor beschriebene Signalumwandlung, wobei jedoch jetzt beispielsweise angenommen wird, daß als Ausgangssignal des Sensors 80 ein sinusförmiges Signal mit der relativen Amplitude 0,8 und der Frequenz 1000 Hz vorliegt. Dieses Ausgangssignal des Sensors 80 ist in Figur 11 als Kurve 1 dargestellt. Das Ausgangssignal der Integratorschaltung 83 wiederum ist als Kurve 2 dargestellt und schließlich ist im unteren Teil des Diagramms wiederum das am Ausgangsanschluß der Analog/Digital-Wandlerschaltung 84 anstehende digitale Ausgangssignal als Kurve 3 gezeigt. Beide Diagramme in Figur 10 und Figur 11 zeigen den Signalverlauf innerhalb eines Zeitintervalls von etwa einer Millisekunde. Die zuvor beschriebenen und in Figur 10 und Figur 11 dargestellten Ausgangssignale werden nach Passieren der Treiberschaltung 85 zu dem entfernt angeordneten Steuergerät 86 weitergeleitet. Die Treiberschaltung 85 dient dabei insbesondere einer Pegelanpassung, beispielsweise einer Verstärkung. Für die Übertragung zwischen dem Ausgangsanschluß der Treiberschaltung 85 und dem Eingangsanschluß 85 des Steuergeräts 86 kann zweckmäßig eine nicht abgeschirmte verdrillte Doppelleitung benutzt werden. Dadurch ist eine relativ einfache und kostengünstige Verbindung der entfernt angeordneten Sensorbaugruppen 800 mit dem zentral angeordneten Steuergerät 86 möglich. In dem Steuergerät 86 ist eine Auswerteschaltung für die von der Sensorbaugruppe 800 gelieferten, digitalen Ausgangsimpulse enthalten, deren wesentliche Einzelheiten in Figur 9 als Blockschaltbild dargestellt sind. Die Auswerteschaltung umfaßt die Baugruppen 86a und 86b. Die Baugruppe 86a ihrerseits umfaßt ein, mindestens einen Eingang und mehrere Ausgänge aufweisendes Schieberegister 90, sowie eine Mehrzahl von Summiergliedern 91, 92, 93 und

7

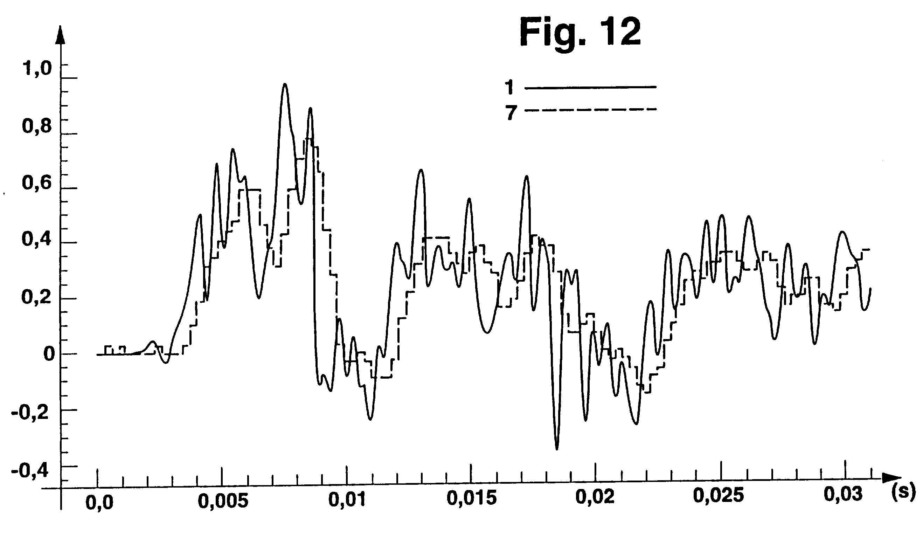

Schaltelementen 97, 98, 99. Jeder Ausgang des Schieberegisters 90 ist dabei in einem Verknüpfungspunkt 94, 95, 96 mit dem Eingangsanschluß jeweils eines, diesem Ausgang des Schieberegisters 90 zugeordneten Summiergliedes 91, 92, 93 verbunden. Auch der Eingangsanschluß des Schieberegisters 90 ist mit jedem der erwähnten Verknüpfungspunkte 94, 95, 96 verbunden. Jeder Ausgangsanschluß jedes Summiergliedes 91, 92, 93 ist mit je einem Schaltelement 97, 98, 99 verbunden. Die Schaltelemente 97, 98, 99 wiederum sind mit Eingangsanschlüssen eines Microcontrollers (Baugruppe 86b) verbunden. Über Ausgangsanschlüsse des Microcontrollers 86b und die dargestellten Verbindungsleitungen sind die Schaltelemente 97, 98, 99 mit einem vorgebbaren Zeittakt derart ansteuerbar, daß die Schaltelemente 97, 98, 99 taktmäßig öffnen und schließen und dabei im geschlossenen Zustand jeweils das an den Ausgangsanschlüssen der Summierglieder 91, 92, 93 anliegende Ausgangssignal zu den Eingangsanschlüssen des Microcontrollers 86b weiterleiten. Anhand der in Figur 12, Figur 13 und Figur 14 dargestellten Funktionsdiagramme wird nun beispielhaft erläutert, wie die Ausgangssignale des Sensors 80, also die an dem Schaltungspunkt 83' der Sensorbaugruppe 800 entstehenden Signale vermittels der Baugruppen 83, 84, 65, 86 von dem örtlich entfernt angeordneten Sensor 80 zu dem zentral angeordneten Steuergerät 86 übertragen und für eine weitere Auswertung durch das Steuergerät 86 aufbereitet werden. In den vorerwähnten Figuren 12, 13, 14 ist auf der Zeitachse jeweils ein Zeitintervall von 30 Millisekunden aufgetragen. Auf der Ordinate sind relative Beschleunigungswerte zwischen den Werten - 0,4 und + 1,0 dargestellt. Der relative Beschleunigungswert 1,0 entspricht dabei etwa einem Wert von rund 50g, also dem 50-fachen der Erdbeschleunigung. In allen drei Diagrammen der Figuren 12 bis 14 stellt die ausgezogen dargestellte Kurve 1 das Ausgangssignal des Sensors 80 am Verknüpfungspunkt 83' in Figur 8 dar. Die von der Treiberschaltung 65 über die Leitung 85' an das Steuergerät 86 weitergeleiteten Impulse werden am Schaltungspunkt 90' dem Eingangsanschluß des Schieberegisters 90 zugeleitet. Die an dem Eingangsanschluß des Schieberegisters 90 anliegenden Impulse werden mit einem Systemtakt von 64 KHz in das Schieberegister 90 eingelesen, das eine Länge von 960 Speicherstufen aufweist. Ein erster Ausgang des Schieberegisters verbindet die 64. Speicherzelle mit dem Verknüpfungspunkt 94 (Figur 9), der mit dem Eingangsanschluß des ersten Summiergliedes 91 verbunden ist. Das Schaltelement 97, das mit dem Ausgangsanschluß des ersten Summiergliedes 91 verbunden ist, wird mit einer Taktfrequenz von T1 = 4 KHz getaktet. Von dem Summierglied 91 werden demzufolge alle 250 Mikrosekunden Mittelwerte der letzten 64 Übertragenen Impulse (entspricht einer Millisekunde) gebildet. Am Anschlußpunkt 97' der Schaltung (Figur 9) steht demzufolge ein in 64 Stufen quantisiertes (6-Bit-)Signal an, das von dem Mikrorechner 86b weiterverarbeitet werden kann. Dieses Signal ist in Figur 12 als Kurve 7 dargestellt und repräsentiert näherungsweise das von dem beschleunigungsempfindlichen Sensor 80 abgegebene Ausgangssignal, also eine Beschleunigung, die von hochfrequenten Signalanteilen geprägt ist.

Ein zweiter Ausgangsanschluß des Schieberegisters 90 ist mit dem Verknüpfungspunkt 95 und dem Eingangsanschluß eines zweiten Summiergliedes 92 verbunden. Das mit dem Ausgangsanschluß des Summiergliedes 92 verbundene Schaltelement 92 wird von dem Mikrorechner 86b mit einer Taktfrequenz von 2 KHz getaktet. Am Schaltungspunkt 98' steht demzufolge ein Ausgangssignal zur Verfügung, das den Mittelwert über die letzten 192 übertragenen Impulse (entspricht einer Übertragungsdauer von rund 3 Millisekunden) darstellt, der in 192 Stufen (entspricht rund 8 Bit) quantisiert ist und alle 500 Mikrosekunden abgefragt wird.

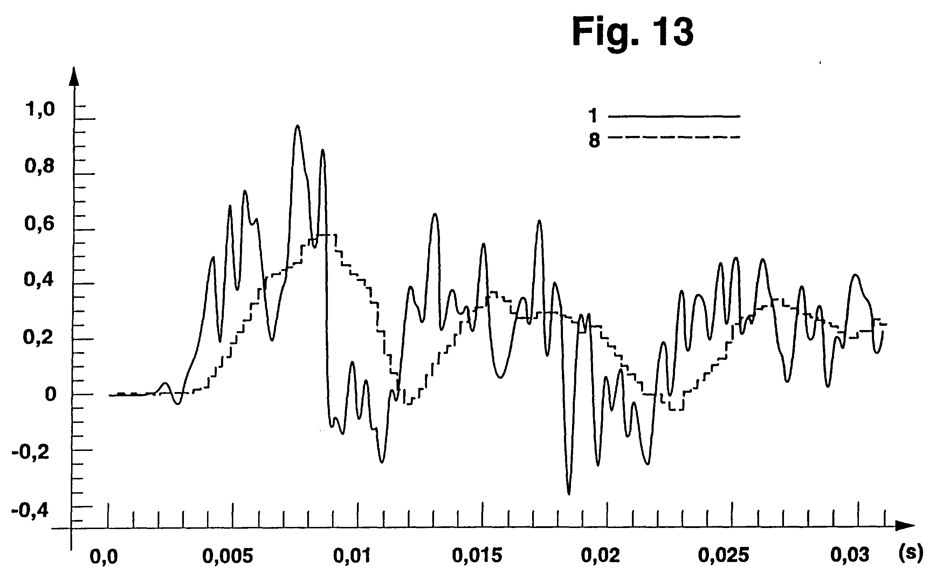

Schließlich ist ein dritter Ausgang des Schieberegisters 90 mit dem Verknüpfungspunkt 96 und dem Eingangsanschluß des Summiergliedes 93 verbunden. Das mit dem Ausgangsanschluß 93 des Summiergliedes 93 verbundene Schaltelement wird mit einer Taktfrequenz von 1 KHz getaktet. Am Schaltungspunkt 99' ergibt sich dadurch alle 1000 Mikrosekunden ein in 960 Stufen (entspricht rund 10 Bit) quantisiertes Ausgangssignal, das einen Mittelwert über die zuletzt übertragenen 960 Impulse (entspricht einer Übertragungszeit von 15 Millisekunden) darstellt. Die an den Schaltungspunkten 98' bzw. 99' anstehenden Ausgangssignale sind in Figur 13 (Kurve 8) und 14 (Kurve 9) dargestellt. Wie bereits oben erwähnt, können die an den Schaltungspunkten 97', 98', 99' anstehenden Ausgangssignale von dem Mikrorechner 86b weiterverarbeitet werden. Zweckmäßig werden diese Ausgangssignale dazu beispielsweise noch in Ausgangsregister abgespeichert, die in dem Blockschaltbild nach Figur 9 nicht ausdrücklich dargestellt sind, da sie beispielsweise auch Bestandteil des Mikrorechners 86b sein können.

Im Vorstehenden wurde beispielhaft dargestellt, auf welche Weise Ausgangssignale externer bzw. ausgelagerter Sensoren besonders einfach und störungsfrei zu einem zentral angeordneten Steuergerät übertragen werden können, um dort weiter ausgewertet zu werden. Eine besonders einfache und kostengünstige Übertragung wird dadurch ermöglicht, daß der zu Eigenschwingungen angeregte beschleunigungsempfindliche Sensor 80 zugleich den Systemtakt zur Verfügung stellt, mit dem das aufgrund von Beschleunigungseinwirkungen erzeugte Ausgangssignal des Sensors übertragen wird. Auf besonders zweckmäßige Weise wird hierdurch eine Doppelfunktion bewirkt. Einerseits kann durch die Schwingungsanregung des Sensors 80 auf einfache Weise seine Funktionsfähigkeit überprüft werden, andererseits wird aus der Schwingungsfrequenz ein Systemtakt für die Signalübertragung zu dem zentral angeordneten Steuergerät 86 abgeleitet. Ein Versagen des Sensors 80, beispielsweise durch mechanische Beschädigung, verhindert den Schwingungsbetrieb und damit letztlich eine Übertragung von unzutreffenden Ausgangssignalen, wodurch gleichzeitig mit Sicherheit die mangelnde Betriebssicherheit des Sensors 80 feststellbar ist.

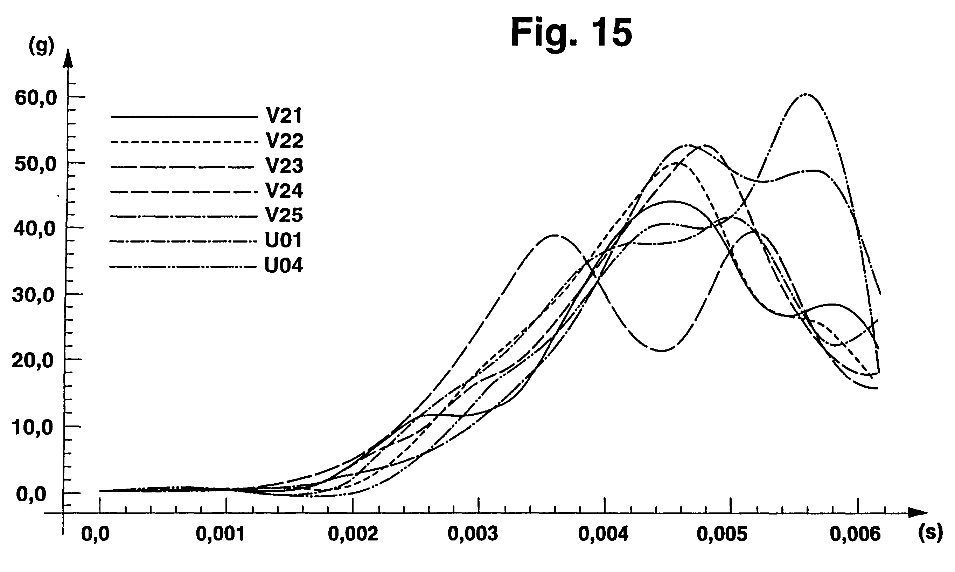

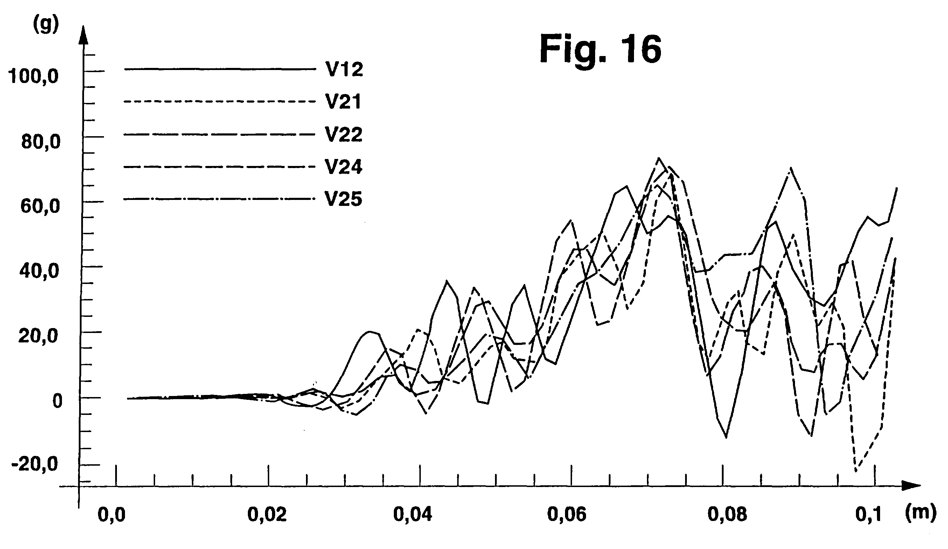

Auf besonders zweckmäßige Art und Weise erfolgt die weitere Signalauswertung mittels des Mikrorechners 86b unter Verwendung eines besonders bemessenen Suchfilters, der eine schnelle Erkennung einer kritischen Unfallsituation, insbesondere auch bei einem Seitenaufprall, ermöglicht. Wie oben bereits erwähnt wurde, sind dabei die von der elektronischen Einrichtung zu erfüllenden Forderungen außerordentlich anspruchsvoll. Aufgrund der außerordentlich geringen Abmessungen der Knautschzonen, die im Seitenbereich eines Fahrzeugs zur Verfügung stehen, ist die zur Erkennung eines kritischen Unfallereignisses zur Verfügung stehende Zeit außerordentlich kurz. So wird beispielsweise von Fahrzeugherstellern gefordert, daß die elektronische Einrichtung in der Lage sein muß, ein kritisches Unfallereignis vor Ablauf von 5 Millisekunden sicher zu erkennen. Da andererseits bei heute üblichen Fahrzeugkonstruktionen vor Ablauf von etwa 2 Millisekunden nach Beginn eines Unfallereignisses nahezu keine charakteristischen Ausgangssignale des beschleunigungsempfindlichen Sensors zur Verfügung stehen, verbleiben praktisch maximal 3 Millisekunden, um die geforderte Entscheidung zu treffen. Die vorerwähnte Situation wird anhand von Figur 15 erläutert, die in einem Diagramm bei Crashversuchen gemessene Beschleunigungswerte als Funktion der Zeit darstellt. Auf der x-Achse oder Zeitachse ist dabei ein Zeitintervall von 6 Millisekunden dargestellt, während auf der y-Achse Beschleunigungswerte zwischen 0 und 60 g (g = Erdbeschleunigung) aufgetragen sind. Die in dem Diagramm erkennbare Kurvenschar (Kurven UO4, UO1, V21, V22, V23, V24, V25) repräsentiert insgesamt sieben Crashversuche, die mit einem bestimmten Fahrzeugtyp und einer zwischen 50 km/h und 60 km/h liegenden Kollisionsgeschwindigkeit durchgeführt worden sind. Die dargestellten Kurvenscharen zeigen das zuvor schon angesprochene Verhalten. In dem Zeitintervall zwischen dem Beginn der Kollision (also 0,0 Sekunden bis etwa 2 Millisekunden) sind die von dem beschleunigungsempfindlichen Sensor abgegebenen Signale noch sehr undifferenziert, so daß im wesentlichen keine auf Art und Schwere des Unfalls hindeutende Informationen gewonnen werden kann. Zwischen etwa 2 Millisekunden und 5 Millisekunden nach Unfallbeginn zeigen die dargestellten Kurven alle eine im wesentlichen ansteigende Flanke. Trägt man zusätzlich die Beschleunigung als Funktion des Eindringweges (Intrusion), wie in Figur 16 dargestellt, auf, dann erkennt man, daß ab etwa 2 cm Eindringtiefe eine auf etwa 5 Zentimeter Eindringweg nachgebende und dabei ähnlich einer Feder immer höhere Kräfte bzw. Beschleunigungen zeigende Struktur eingedrückt wird. Bei einer Eindringtiefe von ca. 7 Zentimeter findet ein Bruch der Struktur statt, was an dem Einbruch der dargestellten Beschleunigungssignale erkennbar wird. Die Ergebnisse dieser Crashversuche lassen den Schluß zu, daß es sich bei den gemessenen Beschleunigungskurven um zumindest für einen bestimmten Fahrzeugtyp charakteristische Kurven handelt, die typisch für Geometrie und Steifigkeit des durch den Unfall betroffenen Fahrzeugs sind, und aus denen sich demzufolge charakteristische Eigenschaften des Unfallvorganges ableiten lassen. Für die praktische Anwendung stellt sich dabei das Problem, aus dem in der Regel stark verrauschten Ausgangssignal des beschleunigungsempfindlichen Sensors diesen charakteristischen Kurvenverlauf zu extrahieren und für den Unfallhergang typische Eigenschaften des Kurvenverlaufs mit möglichst geringem Aufwand, d.h. auch möglichst schmalbandig, zu dem entfernt angeordneten Steuergerät zu übertragen.

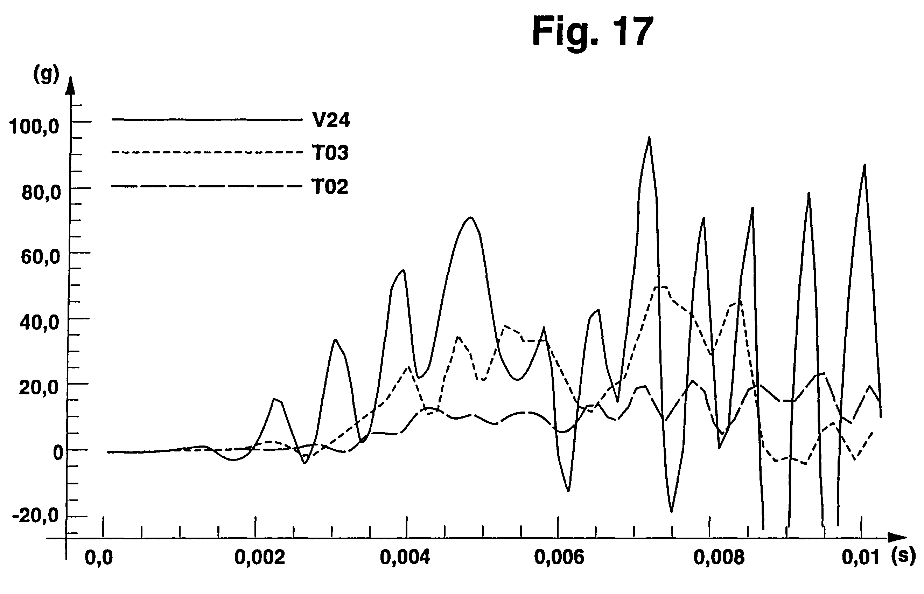

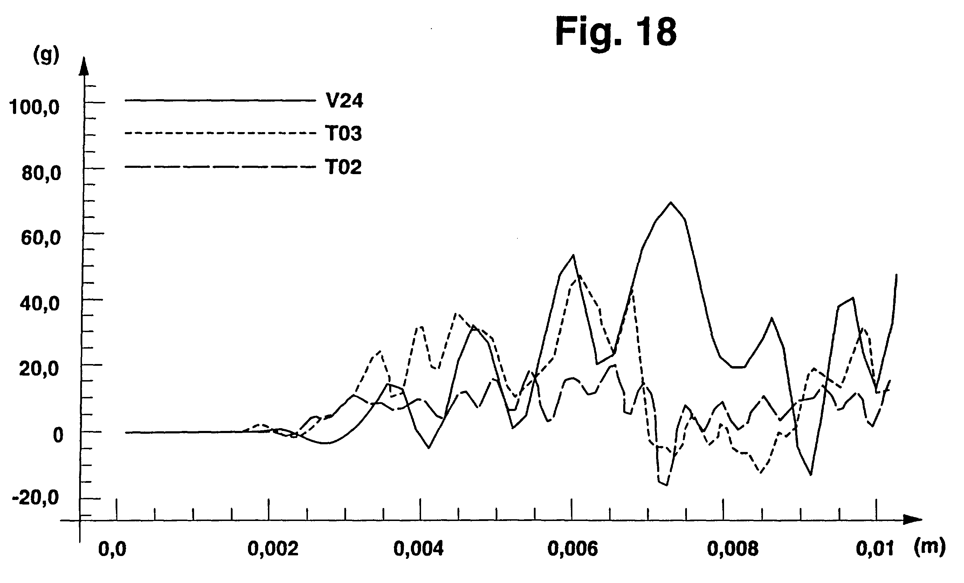

Bevor auf die Lösung dieses Problems eingegangen wird, werden zur weiteren Verdeutlichung der Situation in Figur 17 und Figur 18 noch die Ergebnisse weiterer Crashversuche bei einem bestimmten Fahrzeugtyp dargestellt, die allerdings im Unterschied zu den in Figur 15 und Figur 16 dargestellten Beschleunigungskurven bei unterschiedlichen Aufprallgeschwindigkeiten des aufprallenden Fahrzeugs gewonnen worden sind. Dabei ist in Figur 17 wiederum die Beschleunigung als Funktion der Zeit dargestellt, während in Figur 18 die Beschleunigung in Abhängigkeit von der Eindringtiefe (Intrusion) abgebildet ist. In beiden Diagrammen sind jeweils drei Kurven dargestellt, die unterschiedlichen Aufprallgeschwindigkeiten zugeordnet sind. Die Kurve V 24 entspricht dabei einem Aufprall mit einer Geschwindigkeit von rund 55 km/h, bei dem eine Aktivierung des Airbags nach rund 5 Millisekunden erfolgt. Die Kurve T03 entspricht einem Aufprall mit einer Geschwindigkeit von 30 km/h und einer Aktivierung des Airbags im Zeitintervall zwischen rund 5 Millisekunden und 10 Millisekunden. Schließlich entspricht Kurve T02 einem Aufprall mit einer Geschwindigkeit von rund 25 km/h, der zu keiner Auslösung des Airbags führte. Auch diese Kurven lassen einen für den untersuchten Fahrzeugtyp charakteristischen Verlauf erkennen, der allerdings von zahlreichen hochfrequenten Schwingungskomponenten überlagert ist. Vor einer Weiterleitung des Ausgangssignals des beschleunigungsempfindlichen Sensors wird das Ausgangssignal zweckmäßig einer Filterung unterzogen, die das Nutzsignal von den störenden hochfrequenten Komponenten befreit und auch Rauschanteile unterdrückt. Die Impulsantwort eines dafür geeigneten Suchfilters zweiter Ordnung mit PDT2-Verhalten (proportional, differenzierend, Tiefpaß 2. Ordnung) ist in Figur 19 dargestellt. Dieses Diagramm zeigt relative Amplitudenwerte als Funktion der Zeit. Ein derartiges Filterverhalten kann beispielsweise durch folgende Gleichung beschrieben werden:

$$G(s) = V \frac{b_0 + b_1 s}{a_0 + a_1 s_2 + a_2 s^2}$$

mit zum beispiel

$b_0 =$     1,141.e

$b_1 =$    200
$a_0 =$    1,141e
$a_1 =$    1,375e
$a_2 =$    0,414
$V =$    1

Vergleichsweise gute Ergebnisse sind auch erreichbar mittels eines digitalen Filters (FIR-Filter 6. Ordnung) mit einer Abtastung von rund 500 Mikrosekunden, dessen Impulsantwort im Diagramm der Figur 20 dargestellt ist. Eine solche Filterkurve läßt- sich näherungsweise durch folgenden Ausdruck darstellen:

$$y(k) = \frac{5}{23} u(k) + \frac{7}{23} u(k) + \frac{5}{23} u(k-2) + \frac{3}{23} u(k-3)\ \frac{2}{23} u(k-4) + \frac{1}{23} u(k-5)$$

y Ausgang, u Eingang zum Takt k.

Der mittels der beschriebenen Filterung erreichbare Effekt geht deutlich erkennbar aus dem in Figur 21 dargestellten Diagramm hervor, das wiederum die bereits schon aus Figur 17 und Figur 18 bekannten Signalverläufe, aber diesmal gefiltert, zeigt. Dargestellt ist die Beschleunigung als Funktion der Zeit. Das Diagramm zeigt, daß überlagerte hochfrequente Störungen nahezu völlig unterdrückt sind. Die Signalverläufe der Kurven V24 und T03, die also für einen Crashvorgang charakteristisch sind, streben zu den Sollauslösezeiten (einerseits rund 5 Millisekunden, in dem anderen Fall zwischen 6 und 10 Millisekunden) einem Maximum zu und bieten dadurch einen hohen Signalabstand zu dem Signal der Kurve T02, die einem Nichtauslösefall entspricht. Eine derart ausgestaltete elektronische Einrichtung ist in Gestalt eines Blockschaltbildes in Figur 22 dargestellt. Sie umfaßt zunächst wieder den schon bekannten beschleunigungsempfindlichen Sensor 80, dem ein Suchfilter 220 mit Tiefpaßcharakter nachgeschaltet ist. Der Ausgangsanschluß des Suchfilters 220 ist mit dem Eingangsanschluß eines Vorhersageschaltkreises 221 und eines Integrationskreises 222, 223 verbunden. Die Ausgangsanschlüsse der Baugruppen 221 und 223 sind in einem Verknüpfungspunkt 221' zusammengeführt, der mit dem Eingangsanschluß des von dem Sensor 80 entfernt angeordneten Steuergerätes 86 verbunden ist. In bereits beschriebener Weise ist der Ausgangsanschluß des Steuergerätes 86 mit dem Eingangsanschluß eines Sicherungsmittels, insbesondere eines Airbags 87 verbunden. Durch den Integrationsschaltkreis 222, 223 wird aus dem Ausgangssignal des Sensors 80, das die Beschleunigung der Türbestandteile infolge eines Aufpralls wiedergibt, durch Integration eine der Türgeschwindigkeit entsprechende Größe gebildet. Dieser kann an dem Verknüpfungspunkt 221' durch Überlagerung mit dem Ausgangssignal des Schaltkreises 221 noch eine Komponente der gemessenen Beschleunigung überlagert werden, bevor diese Information an das entfernte Steuergerät 86 übertragen wird. Zu diesem Steuergerät 86 wird in der zuvor beschriebenen Weise nur noch die dynamisch wesentlich langsamere und rauschärmere Geschwindigkeit der Tür übertragen, die eine markante Größe für die Aktivierung des Airbagsystems darstellt. Denn zwischen der Türgeschwindigkeit im Moment des Aufpralls auf den Insassen und der Verletzungsschwere besteht ein unmittelbarer Zusammenhang. Da in der Regel der freie Weg zwischen Tür und dem Fahrzeuginsassen bekannt ist, kann somit aus dem Anstieg der Türgeschwindigkeit über der Zeit bereits sehr früh die Notwendigkeit der Auslösung des Airbagsystems abgeleitet werden. Die Tür bewegt sich dabei in der Regel unabhängig von den durch den Unfall nicht unmittelbar betroffenen Fahrzeugteilen. So wurde beispielsweise bei einem Seitenaufprall mit einer Geschwindigkeit von ca. 50 km/h zu einem Zeitpunkt bereits eine Türgeschwindigkeit von mehr als 65 km/h gemessen, in dem das durch den Unfall betroffene Fahrzeug als Ganzes noch in Ruhe war. Da vermittels der in Figur 22 dargestellten Einrichtung eine Aufbereitung des Sensorsignals im wesentlichen am Einbauort des Sensors erfolgt, kann die Übertragung zu dem zentral angeordneten Steuergerät 86 auf wenige wichtige Informationen begrenzt werden. Beispielsweise können die Amplitudenwerte der in Figur 21 dargestellten Kurven zu dem Steuergerät 86 übertragen werden, die dort mit vorgegebenen Schwellwerten verglichen werden. Beispielsweise kann dann in dem Steuergerät 86 festgestellt werden, zu welchem Zeitpunkt bestimmte Schwellwerte von Beschleunigungswerten bzw. Geschwindigkeitswerten (Türgeschwindigkeit) erreicht werden. Weiterhin kann festgestellt werden, in welcher Reihenfolge und in welchem zeitlichen Abstand diese vorgebbaren Schwellwerte durchlaufen werden. Dies wird anhand von Figur 21 erläutert. In Zusammenhang mit der Kurve V24, die wie oben erwähnt, einem Aufprall bei rund 54 km/h entspricht, wurden drei Punkte (A, B, C) markiert, die entsprechenden Schwellwerten der Beschleunigung, nämlich 20g, 30g und 35g entsprechen. Im zeitlichen Ablauf gesehen wird der Schwellwert A nach rund 4 Millisekunden, der Schwellwert B nach rund 4,8 Millisekunden und der Schwellwert C nach rund 5 Millisekunden erreicht. Der Schwellwert C kennzeichnet dabei denjenigen Wert, der das Steuergerät 86 zu einer Aktivierung des Airbags 87 veranlaßt. Aus der Abfolge dieser Schwellwerte A, B, C kann das Steuergerät 86 ableiten, daß eine stark ansteigende Beschleunigung vorhanden ist und daß die Schwellwerte in der logischen Reihenfolge durchlaufen werden. Dies deutet auf ein kritisches Unfallereignis hin, das die Aktivierung des Airbags notwendig macht, der, wie bereits erwähnt, etwa 5 Millisekunden nach Unfallbeginn ausgelöst wird. Weiterhin ist es auch möglich, durch Abtastung einzelner Amplitudenwerte der Beschleunigungskurve die Steigung dieser Kurve festzustellen und diese mit einem gegebenenfalls abgespeicherten Grenzwert zu vergleichen und das Airbagsystem dann auszulösen, wenn die Steigung einen vorgebbaren Grenzwert überschreitet. Eine steil ansteigende Kurve deutet nämlich ebenfalls auf einen kritischen Unfallablauf hin.

Ein sechstes Ausführungsbeispiel der Erfindung wird nun anhand des in Figur 23 dargestellten Blockdiagramms und der in Figur 24 (Figur 24a bis Figur 24d) dargestellten Funktionsdiagramme erläutert. Die in Figur 23 dargestellte Schaltungsanordnung ist besonders betriebssicher, da sie über einen weiten Temperaturbereich zuverlässig arbeitet und den Einsatz von Sensoren mit einem relativ großen Toleranzbereich ermöglicht. Ein erster Anschluß eines zwei Anschlüsse aufweisenden piezoelektrischen Sensors (Bimorph) X1 ist an den Schaltungspunkt E geführt, der mit dem nicht invertierenden Eingangsanschluß eines ersten Operationsverstärkers OP1 verbunden ist. Der zweite Anschluß des Sensors X1 liegt einerseits am Schaltungspunkt D, der wiederum mit einem Anschluß eines Schaltelements S1 verbunden ist, dessen anderer Anschluß auf Masse liegt. Andererseits ist der zweite Anschluß des Sensors X1 mit einem Widerstand R1 verbunden, dessen anderer Anschluß an dem Schaltungspunkt C liegt, der wiederum mit dem Ausgangsanschluß eines Operationsverstärkers OP3 verbunden ist. Parallel zu der Serienschaltung des Sensors X1 und des Widerstands R1 liegt ein weiterer Widerstand R2. Der Schaltungspunkt E ist über einen Kondensator C1 mit dem Schaltungspunkt F verbunden, der wiederum über einen Widerstand R9 mit dem Ausgangsanschluß eines Pufferverstärkers P1 verbunden ist. An dem Eingangsanschluß des Pufferverstärkers P1 liegt der gemeinsame Anschluß mehrerer Widerstände R8a, R8b, R8c, R8d, derer jeweils zweiter Anschluß über Schaltelemente S4a, S4b, S4c, S4d mit dem Masseanschluß verbindbar ist. Weiterhin ist der Eingangsanschluß des Pufferverstärkers P1 über ein weiteres Schaltelement S3 und einen Widerstand R8e mit dem Ausgangsanschluß des ersten Operationsverstärkers OP1 verbunden. Zwischen diesem Verbindungspunkt und dem Masseanschluß sind zwei Reihenschaltungen aus je zwei Widerständen R10, R11 bzw. R12, R13 parallel geschaltet. Der Mittenabgriff der Reihenschaltung der Widerstände R10, R11 ist an den Schaltpunkt a eines Schaltelements S2 gelegt. Der Mittenabgriff der Reihenschaltung der Widerstände R12, R13 ist an den Schaltanschluß b des Schaltelements S2 gelegt. Ein anderer Anschluß des Schaltelements S2 ist mit dem invertierenden Eingangsanschluß des ersten Operationsverstärkers OP1 verbunden. Der Ausgangsanschluß des Operationsverstärkers OP1 ist über einen Stellwiderstand R17 mit dem invertierenden Eingangsanschluß eines zweiten Operationsverstärkers OP2 verbunden, der als Kalibrierverstärker dient. Der Ausgangsanschluß des Operationsverstärkers OP2 ist über einen Widerstand R16 mit dem invertierenden Eingangsanschluß verbunden. Andererseits ist der Ausgangsanschluß des Operationsverstärkers OP2 an den Schaltungspunkt A geführt. Der nicht invertierende Eingangsanschluß des Operationsverstärkers OP2 ist mit dem Masseanschluß verbunden. Der Stellanschluß des Stellwiderstands R17 ist mit dem Ausgangsanschluß eines PROM verbunden, dessen Eingangsanschluß wiederum mit einem ersten Ausgangsanschluß eines logischen Schaltkreises 230 verbunden ist. Der Ausgangsanschluß des PROM ist weiterhin mit dem Stellanschluß eines zweiten Stellwiderstandes R15 verbunden, dessen Ausgangsanschluß mit dem invertierenden Eingangsanschluß eines dritten Operationsverstärkers OP3 verbunden ist, dessen nicht invertierender Eingangsanschluß mit dem Masseanschluß verbunden ist. Der Ausgangsanschluß des Operationsverstärkers OP3 ist über einen Widerstand R14 mit dem invertierenden Eingangsanschluß verbunden. Der Ausgangsanschluß des Operationsverstärkers OP3 ist weiterhin mit dem Schaltungspunkt c und der Verbindung zwischen den Widerständen R1 und R2 verbunden. Der Schaltungspunkt a ist weiterhin über einen Widerstand R3 mit dem invertierenden Eingangsanschluß eines weiteren Operationsverstärkers OP4 verbunden, dessen nicht invertierender Eingangsanschluß auf Masse liegt. Weiterhin ist der invertierende Eingangsanschluß des operationsverstärkers OP4 über einen Kondensator C3 mit seinem Ausgangsanschluß verbunden, der auch an einem Anschluß des veränderbaren Widerstands R15 liegt. Die Widerstände R8a, R8b, R8c, R8d bilden einen schaltbaren Spannungsteiler, der von einem 4-Bit-Zähler angesteuert wird, der wiederum von dem logischen Schaltkreis 230 angesteuert wird.

Der Sensor X1 wird in zwei unterschiedlichen Betriebsarten eingesetzt. Als Beschleunigungssensor wird die Spannung gemessen, die bei einer Verbiegung infolge Krafteinwirkung erzeugt wird. Im Selbsttest wird der Sensor als frequenzbestimmendes Bauteil eines Oszillators eingesetzt. Im Oszillatorbetrieb ergeben sich jedoch insbesondere dann größere Schwierigkeiten in der Praxis, wenn Sensoren X1 zum Einsatz kommen, die relativ große Toleranzbereiche aufweisen. Um nämlich im Oszillatorbetrieb die Schaltung zum Schwingen zu bringen, müssen zwei Bedingungen erfüllt sein: Die Phase muß 0 sein und die Kreisverstärkung muß größer als 1 sein. Zusätzlich gilt für die Kreisverstärkung eine Obergrenze, ab der die Frequenz nicht mehr von den mechanischen Eigenschaften des Sensors X1 bestimmt wird, sondern überwiegend von den Kapazitäts- und Widerstandsverhältnissen in der Schaltung. Die Schaltung gerät dann in eine Kippschwingung niederer Frequenz nach Art eines astabilen Multivibrators. Für die Anwendung in Steuergeräten für Airbagsysteme muß vor der ersten aktiven Stufe ein passiver Tiefpaß angeordnet sein, dessen Grenzfrequenz in der Größenordnung einiger hundert Hertz, typischerweise kleiner gleich dreihundert Hertz, und damit allerdings so niedrig liegt, daß die Resonanzfrequenz des Oszillatorkreises, der in der Praxis einige 10 Kilohertz beträgt, insbesondere zwischen etwa 30 und 40 Kilohertz, liegt vollkommen unterdrückt wird. Der Tiefpaß muß deshalb für den Testbetrieb, also im Schwingzustand, abschaltbar sein. Bei der relativ hohen Oszillatorfrequenz kommen weiterhin die nicht idealen Eigenschaften der Operationsverstärker voll zum Tragen, nämlich die endliche Leerlaufverstärkung und die Phasendrehung. Beide Eigenschaften beeinflussen die Kreisverstärkung und den Phasengang. Dazu kommt weiterhin, daß die Parameter der Operationsverstärker stark von der Temperatur abhängen. Diese nicht idealen Eigenschaften der einzelnen Komponenten der Schaltung bewirken, daß die Schaltung im Testbetrieb nicht mit jedem beliebigen Sensor X1 und bei jeder beliebigen Temperatur anschwingt, obwohl der Sensor X1 innerhalb vorgebbarer, relativ breiter Toleranzwerte liegt. Diese Problem löst jedoch die vorgeschlagene Schaltung, indem sie einen passiven Tiefpaß zwischen dem Sensor und dem Eingangsverstärker bei Meßbetrieb, eine Temperaturkompensation der Empfindlichkeit bei Meßbetrieb, eine einstellbare Kreisverstärkung bei Testbetrieb zur Abdeckung eventueller Toleranzen, und aus Sicherheitsgründen eine feste Verstärkung bei Meßbetrieb vorsieht. Bei alledem erfordert sie relativ wenige Bauelemente, die zum Teil mehrfach ausgenutzt werden, was einer günstigen Preisgestaltung dienlich ist. In der Praxis hat sich gezeigt, daß alle Toleranzprobleme durch eine in beispielsweise 16 Schritten einstellbare Kreisverstärkung aufgefangen werden können. Damit die Kosten niedrig bleiben, wird die Verstärkung vom Prozessor des Steuergerätes eingestellt. Der Test gilt dann als bestanden, wenn in mindestens einer der 16 möglichen Verstärkungsstufen der Sensor X1 mit der bekannten Nennfrequenz geschwungen hat. Im folgenden werden die Betriebszustände Meßbetrieb und Testbetrieb erläutert.

Meßbetrieb:

Alle Schaltelemente befinden sich in der gezeichneten Stellung. Mit dem Widerstand R2 wird der Arbeitspunkt der Schaltung eingestellt. Der Kondensator C1 liegt über R9 für die Nutzfrequenz niederohmig auf einem Referenzpotential und bildet somit zusammen mit dem Widerstand R1 den passiven Tiefpaß, dessen Grenzfrequenz, wie zuvor schon erwähnt, einige Hundert Hertz beträgt. Das Meßsignal wird von dem Operationsverstärker OP1 verstärkt und gelangt dann auf den Kalibrierverstärker (Operationsverstärker OP2). Dessen Verstärkung wird über das PROM so eingestellt, daß sich am Ausgangsanschluß A die Nennempfindlichkeit einstellt. Der Widerstand R9 bildet zusammen mit der Kapazität des Sensors X1 die untere Grenzfrequenz der Schaltungsanordnung, die weniger als 1 Hertz beträgt. Aufgrund des relativ hohen Widerstandswertes des Widerstandes R9, der einige Hundert Megaohm beträgt, erzeugt der durch ihn fließende Eingangsleckstrom des Operationsverstärkers OP1 eine unerwünschte Offsetspannung, die mittels eines aus den Operationsverstärkern OP3 und OP4 bestehenden Offsetregelkreises kompensierbar ist. Um eine unerwünschte Schwankung der unteren Grenzfrequenz der Schaltungsanordnung zu kompensieren, die wesentlich auch durch die in einem großen Bereich veränderbare Verstärkung des Operationsverstärkers 2 beeinflußt ist, wird nach Möglichkeit die Schleifenverstärkung auf einem konstanten Wert gehalten. Dies wird auf einfache Weise dadurch erreicht, daß die Verstärkung des Operationsverstärkers OP3 mit den beiden höchstwertigen Bits aus dem PROM so eingestellt wird, daß das Produkt der Verstärkungen des Operationsverstärkers OP3 und des Operationsverstärkers OP2 konstant bleibt. Der Kondensator C1 liegt für sehr kleine Frequenzen parallel zu dem Sensor X1 und kompensiert damit den Temperaturgang der Empfindlichkeit des Sensors X1.

Testbetrieb:

Die Schaltelemente S1, S3 sind jetzt geschlossen. Das Schaltelement S2 befindet sich in Schaltstellung a. Der 4-Bit-Zähler ist zurückgesetzt, demzufolge sind also die Schaltelemente S4a, S4b, S4c, S4d ebenfalls noch geschlossen. Der Widerstand R1 wird von dem Schaltelement S1 überbrückt. Daher ist der im Eingangsbereich liegende Tiefpaß nicht mehr wirksam. Für den Schwingbetrieb werden, je nach Toleranz des Sensors X1, Kreisverstärkungen in der Größenordnung zwischen etwa 2 und 8 benötigt. Der Verstärkungsbereich, in dem die Schaltung gerade anschwingt, aber noch nicht in Kippschwingungen gerät, liegt zwischen etwa 0,5 und 3. Die dafür erforderliche Verstärkung wird über den schaltbaren Spannungsteiler R8a, R8b, R8c, R8d, R8e eingestellt. Die Schaltelemente werden von einem 4-Bit-Zähler angesteuert. Damit kann die Verstärkung in 16 Schritten von kleinen Werten beginnend hin zu großen Werten eingestellt werden. Wenn man den ganzen Wertebereich durchläuft, wird der Sensor X1 meistens anfangs gar nicht, einige Stufen später auf der Nennfrequenz schwingen. Bei den höchsten Stufen wird er sogar in eine Kippschwingung kommen. Dieser Sachverhalt wird anhand der Funktionsdiagramme in Figur 24 verdeutlicht. Um nun auch bei besonders ungünstigen Betriebsbedingungen noch ein Anschwingen zu garantieren, ist auch noch eine höhere Verstärkung einstellbar. Diese ungünstigen Betriebsbedingungen können deshalb eintreten, weil die Leerlaufverstärkung des Operationsverstärkers 1 bei der Nennfrequenz schon relativ niedrig und obendrein temperaturabhängig ist. Zur Lösung des Problems kann eine sehr viel höhere Sollverstärkung von beispielsweise 12fach eingestellt werden, so daß effektiv der Faktor 8 mindestens erreichbar ist. Für den Meßbetrieb ist diese Verstärkung allerdings zu hoch, so daß eine Umschaltung von 8 auf 12 vorgesehen ist. Der Pufferverstärker P1 koppelt das Signal mit hoher Impedanz aus und führt es Ober die Widerstands-Kondensator-Kombination R9/C1 auf den Eingang zurück. Der Widerstand R9 und der Kondensator C1 dienen dabei als Phasenschieber. Damit ist der Oszillatorschwingkreis geschlossen. Die Schwingamplitude ist in der Regel so hoch, daß die Operationsverstärker begrenzen. Am Ausgang a steht daher ein digitales Signal zur Verfügung, das von einem Prozessor bequem auswertbar ist. Die Schaltung wurde so ausgelegt,

EP 0 750 749 B1

daß nur eine minimale Anschlußzahl benötigt wird. Dies konnte nur dadurch erreicht werden, daß einige Leitungen mehrfach belegt sind. Die deshalb erforderliche Dekodierung erfolgt im logischen Schaltkreis 230. Der Anschluß P dient als Dateneingang bzw. Programmierspannungseingang während des Kalibriervorgangs. Der Anschlußtest ist direkt mit dem Prozessor verbunden. Während des Meßbetriebs liegt er auf Masse. Der Testbetrieb wird eingeleitet, indem der Anschluß "TEST" auf die Spannung VDD gelegt wird. Bei günstigen Toleranzverhältnissen schwingt die Schaltung schon an. Wenn nach ungefähr 50 Millisekunden noch keine Schwingung beobachtet wird, kann der Anschluß TEST für weniger als 10 Mikrosekunden auf Masse gelegt werden. Dadurch wird die Kreisverstärkung auf den nächsthöheren Wert angehoben. Anschließend wird wieder für einen Zeitraum von 50 Millisekunden auf ein Anschwingen gewartet. Falls das gewünschte Signal beobachtet wurde, wird der Anschluß TEST wieder für mindestens 100 Mikrosekunden auf Masse gelegt. Dadurch wird der 4-Bit-Zähler wieder zurückgesetzt. Am Ausgang des Pufferverstärkers P1 stellt sich die Referenzspannung ein, die Schaltung ist im Meßbetrieb. Die vorgeschlagene Schaltungsanordnung zeichnet sich insbesondere durch folgende Eigenschaften aus. Es ist ein mechanischer Selbsttest möglich. Keine zusätzlichen Komponenten sind für den Testbetrieb erforderlich. Durch eine Mehrfachausnutzung des Kondensators C1 als Tiefpaß, Temperaturkompensator, Phasenschieber und Rückkoppelelement werden vergleichsweise wenig Bauelemente benötigt, was einer günstigen Preisgestaltung zugute kommt. Die Schaltungsanordung ist gegen vergleichsweise große Toleranzabweichungen insbesondere der Bauelemente Sensor X1, Operationsverstärker OP1, Kondensator C1, Widerstand R9 vergleichsweise unempfindlich, da solche Toleranzen durch eine einstellbare Kreisverstärkung ausgeglichen werden können. Die Einstellung der Kreisverstärkung erfolgt vom Prozessor durch kurze Impulse, also durch eine Mehrfachausnutzung der Leitung TEST. Der Tiefpaß ist vermittels eines auf der kalten Seite des Sensors X1 angeordneten Schaltelementes abschaltbar, wodurch die Schaltungsanordnung unempfindlich gegenüber Leckströmen ist.

**Patentansprüche**

1. Elektronische Einrichtung mit einem zu Schwingungen anregbaren beschleunigungsempfindlichen Sensor, die Mittel zur Überprüfung der Funktionsfähigkeit des Sensors umfaßt, dadurch gekennzeichnet, daß die elektronische Einrichtung einen den Sensor (10) als frequenzbestimmendes Bauelement umfassenden elektrischen Schwingkreis aufweist, daß die elektronishe Einrichtung derart ausgebiltet ist, daß der Sensor (10), zumindest während der Dauer einer Überprüfungsphase, zu Schwingungen angeregt ist, und daß aus dem Auftreten eine Resonanzschwingung die Funktionsfähigkeit des Sensors (10) abgeleitet wird.

2. Elektronische Einrichtung nach Anspruch 1, dadurch gekennzeichnet, daß die elektronische Einrichtung derart ausgebiltet ist, daß der Sensor (10) während der Überprüfungsphase auf seiner Eigenfrequenz schwingt.

3. Elektronische Einrichtung nach einem der Ansprüche 1, 2, dadurch gekennzeichnet, daß die Schwingungsfrequenz des Sensors (10) ein Vielfaches der Nutzsignalfrequenz des Sensors beträgt.

4. Elektronische Einrichtung nach einem der Ansprüche 1 bis 3, dadurch gekennzeichnet, daß die Schwingungsfrequenz des Sensors (10) im Bereich einiger 10 Kilohertz, insbesondere zwischen 10 Kilohertz und 50 Kilohertz liegt.

5. Elektronische Einrichtung nach einem der Ansprüche 1 bis 4, dadurch gekennzeichnet, daß der Nutzsignalfrequenzbereich einige 100 Hertz, insbesondere zwischen 0 Hertz und 500 Hertz beträgt.

6. Elektronische Einrichtung nach einem der Ansprüche 1 bis 5, dadurch gekennzeichnet, daß die elektronische Einrichtung Schaltmittel (S1, S2, S3, S4, S5) umfaßt, die derart schaltbar sind, daß der Sensor (10) wechselweise in Parallel- bzw. Serienresonanz anregbar ist.

7. Elektronische Einrichtung nach Anspruch 6, dadurch gekennzeichnet, daß die Schaltmittel (S1, S2, S3, S4, S5) von einem Mikrorechner (29) ansteuerbar sind.

8. Elektronische Einrichtung nach einem der Ansprüche 1 bis 7, dadurch gekennzeichnet, daß die Schwingungsfrequenz des schwingenden Sensors (10, 80) von einer Auswertungseinrichtung (10, 29) auswertbar ist und daß für die Auswertung der Frequenz ein Frequenzbereich festgelegt ist, innerhalb dessen die Resonanzfrequenz des funktionsfähigen Sensors liegt.

9. Elektronische Einrichtung nach einem der Ansprüche 1 bis 8, dadurch gekennzeichnet, daß die Einrichtung mindestens einen Tiefpaßfilter (26, 28, 66) umfaßt, dessen Grenzfrequenz wesentlich unterhalb der Schwingungsfrequenz des Sensors (10, 860) liegt und daß Schaltmittel zur Frequenzteilung der Schwingungsfrequenz des Sensors vorgesehen sind, derart, daß zumindest die geteilte Schwingungsfrequenz des Sensors den Tiefpaß (26, 28, 66) passieren kann und zu der Auswerteschaltung (Mikrorechner 29, 73) gelangt.

**10.** Elektronische Einrichtung nach Anspruch 9, dadurch gekennzeichnet, daß die Mittel zur Frequenzteilung eine bistabile Kippstufe (21) umfassen, die vorzugsweise vermittels eines Steuersignals der Auswerteschaltung (Mikrorechner 29) triggerbar ist.

**11.** Elektronische Einrichtung nach einem der Ansprüche 1 bis 10, dadurch gekennzeichnet, daß die Einrichtung so ausgebiltet ist, daß von der Schwingungsfrequenz des Sensors (10) ein Taktsignal zur Steuerung der Auswerteschaltung (29, 67, 70, 71, 72, 73) abgeleitet wird.

**12.** Elektronische Einrichtung nach Anspruch 11, dadurch gekennzeichnet, daß zur Ableitung des Taktsignals aus der Schwingungsfrequenz des Sensors (64) eine Taktteilerstufe, insbesondere eine monostabile Kippstufe (69) vorgesehen ist, der eingangsseitig, vorzugsweise über eine Impulsformerstufe (68) die Oszillatorfrequenz des Sensors (10) zugeleitet wird.

**13.** Elektronische Einrichtung nach einem der Ansprüche 1 bis 11, dadurch gekennzeichnet, daß zur Ableitung des Taktsignals aus der Schwingungsfrequenz des Sensors (10, 80) eine Taktvervielfacherstufe, insbesondere Taktverdopplungsstufe (82), vorgesehen ist.

**14.** Elektronische Einrichtung nach einem der Ansprüche 1 bis 13, dadurch gekennzeichnet, daß ein mindestens einen Eingang und mehrere Ausgänge umfassendes Schieberegister (90) vorgesehen ist, daß der Eingang des Schieberegisters (96) mit jeweils jedem der mehreren Ausgänge des Schieberegisters (90) verbunden ist (Verknüpfungspunkte 94, 95, 96), daß jeder Verknüpfungspunkt (94, 95, 96) jeweils mit dem Eingangsanschluß eines Summiergliedes (91, 92, 93) verbunden ist, deren Ausgangsanschlüsse mit je einem Schaltelement (97, 98, 99) verbunden sind.

**15.** Elektronische Einrichtung nach Anspruch 14, dadurch gekennzeichnet, daß die Schaltelemente (97, 98, 99) von einem Mikrorechner (86b) steuerbar sind.

**16.** Elektronische Einrichtung nach einem der Ansprüche 1 bis 15, dadurch gekennzeichnet, daß die Einrichtung so ausgebildet ist, daß der Sensor (10), zumindest zeitweilig, in Doppelfunktion als Beschleunigungsgeber und als Schwingungserzeuger betrieben wird.

**17.** Elektronische Einrichtung nach einem der Ansprüche 1 bis 16, dadurch gekennzeichnet, daß die Kreisverstärkung des Oszillatorkreises einstellbar ist.

**18.** Elektronische Einrichtung nach Anspruch 17, dadurch gekennzeichnet, daß zur Einstellung der Verstärkung ein schaltbarer Spannungsteiler (R8a, R8b, R8c, R8d, R8e) vorgesehen ist, der von einem Zählerbaustein (4-Bit-Zähler) ansteuerbar ist.

**19.** Elektronische Einrichtung nach einem der Ansprüche 1 bis 18, dadurch gekennzeichnet, daß ein im Meßbetrieb den Bestandteil eines Tiefpasses bildender Kondensator C1 mehrfach ausgenutzt ist, indem er im Testbetrieb als Temperaturkondensator, Phasenschieber und Rückkoppelelement eingesetzt ist.

## Claims

**1.** Electronic device having an acceleration-sensitive sensor which can be excited to oscillate and comprises means for checking the operability of the sensor, characterized in that the electronic device has an electric resonant circuit, comprising the sensor (10) as frequency-determining component, and in that the electronic device is constructed in such a way that the sensor (10) is excited to oscillate at least during the duration of a checking phase, and that the operability of the sensor (10) is derived from the occurrence of a resonance oscillation.

**2.** Electronic device according to Claim 1, characterized in that the electronic device is constructed in such a way that the sensor (10) oscillates at its natural frequency during the checking phase.

**3.** Electronic device according to one of Claims 1, 2, characterized in that the oscillating frequency of the sensor (10) is a multiple of the useful signal frequency of the sensor.

4. Electronic device according to one of Claims 1 to 3, characterized in that the oscillating frequency of the sensor (10) is in the range of a few 10 kilohertz, in particular between 10 kilohertz and 50 kilohertz.

5. Electronic device according to one of Claims 1 to 4, characterized in that the useful signal frequency range is a few 100 hertz, in particular between 0 hertz and 500 hertz.

6. Electronic device according to one of Claims 1 to 5, characterized in that the electronic device comprises switching means (S1, S2, S3, S4, S5) which can be switched in such a way that the sensor (10) can be excited alternately into parallel and series resonance, respectively.

7. Electronic device according to Claim 6, characterized in that the switching means (S1, S2, S3, S4, S5) can be driven by a microcomputer (29).

8. Electronic device according to one of Claims 1 to 7, characterized in that the oscillating frequency of the oscillating sensor (10, 80) can be evaluated by an evaluation device (10, 29), and in that to evaluate the frequency a frequency range is fixed within which the resonant frequency of the operational sensor is situated.

9. Electronic device according to one of Claims 1 to 8, characterized in that the device comprises at least one lowpass filter (26, 28, 66) whose cut-off frequency is essentially situated below the oscillating frequency of the sensor (10, 860), and in that switching means for frequency division of the oscillating frequency of the sensor are provided in such a way that at least the divided oscillating frequency of the sensor can pass through the lowpass filter (26, 28, 66), and passes to the evaluation circuit (microcomputer 29, 73).

10. Electronic device according to Claim 9, characterized in that the means for frequency division comprise a bistable flip-flop (21) which can preferably be triggered by means of a control signal from the evaluation circuit (microcomputer 29).

11. Electronic device according to one of Claims 1 to 10, characterized in that the device is constructed such that a clock signal for controlling the evaluation circuit (29, 67, 70, 71, 72, 73) is derived from the oscillating frequency of the sensor (10).

12. Electronic device according to Claim 11, characterized in that provided for the purpose of deriving the clock signal from the oscillating frequency of the sensor (64) is a clock pulse divider stage, in particular a monostable flip-flop (69), which on the input side is fed the oscillator frequency of the sensor (10), preferably via a pulse shaper stage (68).

13. Electronic device according to one of Claims 1 to 11, characterized in that for the purpose of deriving the clock signal from the oscillating frequency of the sensor (10, 80), a clock multiplier stage, in particular a clock doubler stage (82), is provided.

14. Electronic device according to one of Claims 1 to 13, characterized in that a shift register (90) comprising at least one input and a plurality of outputs is provided, in that the input of the shift register (96) is connected respectively to each of the multiplicity of outputs of the shift register (90) (node 94, 95, 96), and in that each node (94, 95, 96) is respectively connected to the input terminal of a sunning element (91, 92, 93) whose output terminals are connected to one switching element (97, 98, 99) each.

15. Electronic device according to Claim 14, characterized in that the switching elements (97, 98, 99) can be controlled by a microcomputer (86b).

16. Electronic device according to one of Claims 1 to 15, characterized in that the device is constructed such that the sensor (10) is operated at least temporarily with a double function as an acceleration sensor and as an oscillation generator.

17. Electronic device according to one of Claims 1 to 16, characterized in that the loop gain of the oscillator circuit is adjustable.

18. Electronic device according to Claim 17, characterized in that provided for the purpose of adjusting the gain is a switchable voltage divider (R8a, R8b, R8c, R8d, R8e) which can be driven by a counter module (4-bit counter).

19. Electronic device according to one of Claims 1 to 18, characterized in that the capacitor C1 which forms the component of a lowpass filter in measurement operation is utilised multiply by being used in test operation as a temperature capacitor, phase shifter and feedback element.

**Revendications**

1. Installation électronique comportant un capteur d'accélération susceptible d'être excité pour osciller, comprenant des moyens pour vérifier le bon fonctionnement du capteur,
caractérisée en ce que

l'installation électronique comprend un circuit oscillant électrique dont le composant définissant la fréquence est le capteur (10), et est formée de sorte que le capteur (10) définissant la fréquence est excité en oscillation au moins pendant la durée d'une phase de vérification, et
on déduit le bon fonctionnement du capteur (10) à partir de la mise en oscillation de résonance.

2. Installation électronique selon la revendication 1,
caractérisée en ce que

l'installation électronique est réalisée pour que le capteur (10) oscille à sa fréquence propre pendant la phase de contrôle.

3. Installation électronique selon l'une des revendications 1 et 2,
caractérisée en ce que

la fréquence d'oscillation du capteur (10) est un multiple de la fréquence du signal utile du capteur.

4. Installation électronique selon l'une des revendications 1 à 3,
caractérisée en ce que

la fréquence d'oscillation du capteur (10) se situe dans une plage de quelques 10 KHz, en particulier entre 10 KHz et 50 KHz.

5. Installation électronique selon l'une des revendications 1 à 4,
caractérisée en ce que

la plage de fréquence du signal utile est de quelques 100 Hz, notamment comprise entre 0 Hz et 500 Hz.

6. Installation électronique selon l'une des revendications 1 à 5,
caractérisée en ce que

l'installation électronique comporte des moyens de commutation (S1, S2, S3, S4, S5) qui peuvent être commutés pour que le capteur (10) soit excité alternativement en résonance parallèle ou en résonance série.

7. Installation électronique selon la revendication 6,
caractérisée en ce que

les moyens de commutation (S1, S2, S3, S4, S5) sont commandés par un microcalculateur (29).

8. Installation électronique selon l'une des revendications 1 à 7,
caractérisée en ce que

la fréquence d'oscillation du capteur oscillant (10, 80) est exploitée par une installation d'exploitation (10, 29) et,
pour l'exploitation de la fréquence, on a fixé une plage de fréquence à l'intérieur de laquelle se situe la fréquence de résonance du capteur fonctionnant bien.

**9.** Installation électronique selon l'une des revendications 1 à 8,
caractérisée en ce que

l'installation comprend au moins un filtre passe-bas (26, 28, 66) dont la fréquence limite se situe principalement en dessous de la fréquence d'oscillation du capteur (10, 860) et,
dessous de la fréquence d'oscillation du capteur (10, 860) et,
des moyens de commutation sont prévus pour diviser la fréquence d'oscillation du capteur pour qu'au moins la fréquence divisée du capteur puisse passer le filtre passe-bas (26, 28, 66) et arrive au circuit d'exploitation (microprocesseur 29, 73).

**10.** Installation électronique selon la revendication 9,
caractérisée en ce que

les moyens de division haute fréquence comprennent une bascule bistable (21) qui est de préférence déclenchée par un signal de commande du circuit d'exploitation (microprocesseur 29).

**11.** Installation électronique selon l'une des revendications 1 à 10,
caractérisée en ce que

l'installation électrique déduit de la fréquence d'oscillation du capteur (10), un signal d'horloge pour commander le circuit d'exploitation (29, 67, 70, 71, 72, 73).

**12.** Installation électronique selon la revendication 11,
caractérisée en ce que

pour déduire le signal d'horloge de la fréquence d'oscillation du capteur (64), il est prévu un étage diviseur de cadence notamment une bascule monostable (69) dont l'entrée reçoit de préférence par l'intermédiaire d'un étage formeur d'impulsions (68), la fréquence d'oscillation du capteur (10).

**13.** Installation électronique selon l'une des revendications 1 à 11,
caractérisée par

un étage multiplicateur de cadence notamment un étage doubleur de fréquence (82) pour déduire le signal de cadence (signal d'horloge) de la fréquence d'oscillation du capteur (10, 80).

**14.** Installation électronique selon l'une des revendications 1 à 13,
caractérisée par

un registre à décalage (90) à au moins une entrée et plusieurs sorties, l'entrée du registre à décalage (96) étant reliée chaque fois à chacune des entrées du registre à décalage (90) (points de liaison 94, 95, 96), chaque point de liaison (94, 95, 96) étant relié respectivement à l'entrée d'un additionneur (91, 92, 93) dont les bornes de sortie sont reliées chacune à un élément de commutation (97, 98, 99).

**15.** Installation électronique selon la revendication 14,
caractérisée en ce que

les éléments de commutation (97, 98, 99) sont commandés par un microprocesseur (86b).

**16.** Installation électronique selon l'une des revendications 1 à 15,
caractérisée en ce que

le capteur (10) fonctionne au moins de temps à autre selon une double fonction comme capteur d'accélération et comme générateur d'oscillations.

**17.** Installation électronique selon l'une des revendications 1 à 16,
caractérisée en ce que

l'amplification en boucle du circuit oscillant est réglable.

18. Installation électronique selon la revendication 17,
caractérisée par

un diviseur de tension commutable (R8a, R8b, R8c, R8d, R8e) pour régler l'amplification, ce diviseur de tension étant commandé par un compteur (compteur à 4 bits).

19. Installation électronique selon l'une des revendications 1 à 18,
caractérisée en ce qu'

un condensateur (C1) formant un filtre passe-bas en mode de mesure, est utilisé plusieurs fois, en mode de contrôle, comme condensateur de correction de température, comme déphaseur et comme élément de réaction.

# Fig. 1

# Fig. 2

| Schalterstellungen: | | | | | |
|---|---|---|---|---|---|
| Funktion | S1 | S2 | S3 | S4 | S5 |
| Normalbetrieb | 0 | 1 | 0 | 1 | 0 |
| Selbsttest | X | X | X | X | 1 |
| Serienresonanz | 1 | 0 | 0 | 1 | 1 |
| Parallelresonanz | 0 | 1 | 1 | 0 | 1 |

1 ≙ geschlossen
0 ≙ offen

# Fig. 3

ca. 50 µs

# Fig. 4

Fig.5a

Fig.5b

Fig.5c

Fig.5d

# Fig. 6

EP 0 750 749 B1

**Fig.7a**

**Fig.7b**

**Fig.7c**

**Fig.7d**

**Fig.7e**

**Fig.7f**

**Fig.7g**

# Fig. 8

**800**

# Fig. 9

**86a**

**86b**

# Fig. 10

EP 0 750 749 B1

# Fig. 11

EP 0 750 749 B1

# Fig. 12

EP 0 750 749 B1

# Fig. 13

EP 0 750 749 B1

# Fig. 14

EP 0 750 749 B1

# Fig. 15

EP 0 750 749 B1

**Fig. 16**

EP 0 750 749 B1

# Fig. 17

**Fig. 18**

EP 0 750 749 B1

**Fig. 19**

EP 0 750 749 B1

# Fig. 20

**Fig. 21**

EP 0 750 749 B1

# Fig. 22

# Fig. 23

EP 0 750 749 B1

$$\perp = \frac{VDD}{2}$$

Fig. 24a

Fig. 24b

Fig. 24c

Fig. 24d

EP 0 750 749 B1